# FASCICULE DE BREVET EUROPEEN

(11) **EP 0 423 410 B1**
(45) Date de publication et mention de la délivrance du brevet: **28.06.1995**
(21) Numéro de dépôt: 89402874.5
(22) Date de dépôt: 18.10.1989
(51) Int. Cl.: H04Q 11/04, H04M 11/06

(54) **Procédé de transmission de données sur un bus interne d'une station de travail, dispositif à bus interne, permettant la mise en oeuvre du procédé, et circuit d'adaptation pour ce bus interne**
Datenübertragungsverfahren über einen internen Bus einer Arbeitsstation, Vorrichtung mit einem internen Bus zur Durchführung dieses Verfahrens und Anpassungsschaltung für diesen internen Bus
Method for data transmission on an internal workstation bus, device with an internal bus using this method and adaption circuit for this internal bus

(43) Date de publication de la demande: 24.04.1991
(73) Titulaire: BULL S.A., 92800 Puteaux (FR)
(72) Inventeur: Mouro, Alain, F-93800 Epinay sur Seine (FR); Colin, Michel, F-78490 Noisy le Roi (FR)
(74) Mandataire: Colombe, Michel

(56) Documents cités:
- FR-A- 2 637 440
- ELECTRONICA vol. 36, no. 22, 18 novembre 1988, pages 21 - 37; D.Gullick et al.:"ISDN protocol in hardware"
- ELECTRONIC DESIGN. vol. 32, no. 15, juillet 1984, HASBROUCK HEIGHTS, N pages 171 - 178; W. Bourgonje: "Twisted-pair bus carries speech, data, text, and images"
- WESCON TECHNICAL PAPERS, SESSION 20, PAPER , vol. 31, 18 novembre 1987, NORTH HOLLYWOOD US pages 1 - 5; H.Weber: "Dedicated ISDN VLSI and software enhance Intel's standard computing architectures"
- INT.CONF. ON THE ISDN AND ITS IMPACT ON INFORMATION TECHNOLOGY 14 janvier 1985, pages 103 - 109; G.Geiger et al.: "VLSI chip set spurs ISDN system innovation"
- COMPUTER DESIGN. vol. 24, no. 11, septembre 1985, LITTLETON, (US) pages 42 -45; N.Mokhoff: AT&T's DMI integrates voice and data communications"
- CONF. RECORD OF THE IEEE/IEICE GLOBAL TELECOMMUNICATIONS CONFERENCE, SESSION 1, PAPER 8 vol. 1, 15 novembre 1987, Tokyo (JP) pages 31 - 35; M.Fujioka et al.: "Design and implementation of ISDN user-network protocol"

## Description

La présente invention concerne un procédé de transmission de données sur un bus interne d'une station de travail, un dispositif à bus interne permettant la mise en oeuvre du procédé, et circuit d'adaptation pour ce bus interne.

Dans l'art antérieur, des moyens de transmission permettant de faire communiquer plusieurs ordinateurs de bureau entre eux sont connus. Selon la distance de transmission, on utilise soit un réseau local (LAN) ou le réseau public de télétransmission (WAN). Jusqu'à présent, les ordinateurs couplés entre eux par l'un de ces deux moyens échangeaient uniquement des informations numérisées.

D'autre part, le réseau numérique commuté actuel (RNIS) s'ouvre sur la transmission multicanaux qui permettra prochainement d'intégrer plusieurs services de largeur de bandes différentes comme la voix, les données alphanumériques ou les images comprimées pour la transmission.

Actuellement, il est connu des postes de travail dans lesquels la voix arrive sur une ligne, tandis que des données alphanumériques arrivent sur une ligne de données spécialisées.

Il est également connu des systèmes gérant voix et données sur la même ligne. Le document par Gullick et al, "ISDN protocol in hardware", ELECTRONICA ,Vol. 36, no. 22, 18 novembre 1988, pages 21 - 37, enseigne la liaison entre une interface S, une unité de commande de protocoles IDPC et un microprocesseur 80188 par un bus interne, le microprocesseur étant destiné à contrôler les accès DMA et la fonction "timer". De façon similaire, le document WESCON TECHNICAL PAPERS, Session 20, Paper, Vol. 31, 18 novembre 1987, NORTH HOLLYWOOD, US, pages 1 - 5; H. Weber: "Dedicated ISDN VLSI and software enhance Intel's standard computing architectures" décrit une solution à la connexion des facilités du Réseau Numérique à Intégration de Services (RNIS) sous la forme d'un microprocesseur 80188 relié à un ensemble composée d'une interface S et d'une interface système (par exemple un contrôleur de protocole), interconnectées entre elles par un bus série interne. L'inconvénient de ces systèmes est leur structure figée.

Un des buts de la présente invention est de permettre la connexion des facilités du RNIS aux ressources d'une station de travail de bureau du type micro-ordinateur ou mini-ordinateur, en conférant à la station une modularité de structure qui permet au fur et à mesure des besoins d'ajouter toute carte dont la connexion peut être faite à une ligne téléphonique (par exemple une carte de traitement d'images ou une carte d'interface série pour imprimante et/ou scanner).

Ce but est atteint par le fait que la station de travail comporte un coupleur d'interface de ligne de communication téléphonique relié à un dispositif à bus interne à trois lignes constitué d'une ligne d'entrée-sortie de données, d'une ligne de synchronisation de trame et d'une horloge bit, un dispositif contrôleur de communication multi-protocoles et un dispositif de traitement de la voix reliés chacun entre le bus interne et le bus système de la station de travail.

De plus, le document par Gullick et al, décrit la structure d'une trame de communication, constituée impérativement de 36 bits d'informations et de 12 bits de synchronisation et de codes de commandes. L'inconvénient de cette structure figée est son manque de flexibilité.

Un autre but de l'invention est de proposer un procédé de transmission de données sur un bus interne d'une station de travail du type ci-dessus, dans lequel l'aspect modularité et flexibilité est amélioré.

Ce but est atteint par le fait que le procédé de transmission de données sur un bus interne d'une station de travail du type ci-dessus mettant en communication une carte coupleur d'interface avec une ligne téléphonique et les cartes coupleurs adaptées à différentes fonctions de communication, consiste à :
utiliser le signal de synchronisation d'un réseau voix, pour définir une trame de communication ;
à insérer dans chaque trame de 125 microsecondes ainsi définie, au plus N sous-trames, chacune de longueur variable pour connecter au maximum N cartes coupleurs ;
à inscrire sur cinq bits du premier octet le nombre d'octets de données transmises par la sous-trame, sur les trois bits suivants le nombre de bits du dernier octet et sur quatre bits du deuxième octet de chaque sous-trame l'adresse destinataire de l'équipement adressé.

Selon une autre caractéristique, l'équipement récepteur des codes de l'entête de chaque sous-trame circulant sur le bus absorbe les seules sous-trames dont l'adresse destinataire correspond à l'adresse du coupleur.

Selon une autre caractéristique, chaque sous-trame peut avoir une longueur variable entre 0 et 32 octets de données.

Selon une autre caractéristique, une sous-trame ayant zéro octet de données occupe réellement un octet correspondant au code hexadécimal FF.

Un autre but de l'invention est de proposer un dispositif mettant en oeuvre le procédé de transmission.

Ce but est atteint par le fait que le dispositif à bus interne pour station de travail du type ci-dessus comporte un bus de trois lignes constitué d'une ligne d'entrée-sortie de données, d'une ligne de synchronisation de trame et d'une ligne d'horloge bit, ce bus mettant en communication :
par un premier circuit d'adaptation, une carte coupleur d'interfaces lignes téléphoniques, avec la ligne téléphonique ;
par un second circuit d'adaptation, une carte contrôleur de communication multi-protocoles et ;
par un troisième circuit d'adaptation, une carte de traitement de la voix,
le circuit d'adaptation comportant au moins: un circuit pour chacun d'une pluralité de canaux (A,B,C) de transmission série, et au moins un circuit pour chacun d'une pluralité de canaux (A,B,C) de réception série, un ensemble de registres de cinq bits et un ensemble de circuits de description des sous-trames et de validation des adresses et commandes de sous-trames.

Selon une autre caractéristique, ce bus met en communication, par un quatrième circuit d'adaptation, une carte de traitement d'images assurant la compression et la décompression des images.

Selon une autre caractéristique, ce bus met en communication, par un cinquième circuit d'adaptation, une carte d'interfaces séries pour imprimantes et/ou scanners.

Selon une autre caractéristique, la carte contrôleur de communications multi-protocoles, la carte de traitement d'images et la carte de traitement de la voix sont chacune couplées au bus principal du microprocesseur de la station de travail.

Un autre but de l'invention est de proposer un circuit d'adaptation permettant de relier les cartes précédentes au bus interne mettant en oeuvre le procédé ci-dessus.

Ce but est atteint par le fait que le circuit d'adaptation entre un bus interne de transmission et un dispositif de traitement de données ayant une adresse destinataire et connecté à un bus parallèle du système d'une station de travail comporte:
au moins un circuit de transmission série pour chacun d'une pluralité de canaux (A,B,C) de transmission/réception connectés au bus parallèle du système à travers le dispositif de traitement de données pour traiter les données transmises par le dispositif à chacun d'au moins deux canaux série de transmission/réception (A,B,C),
au moins un canal de réception parmi chacun d'une pluralité de canaux de transmission/réception (A,B,C) connecté au bus parallèle du système à travers le dispositif de traitement de données pour traiter les données reçues du dispositif à travers chacun d'au moins deux canaux série de transmission/réception,
un ensemble de registres de cinq bits adressable, connecté audit circuit de transmission de canal et audit circuit de réception de canal pour recevoir les données transmises et reçues du dispositif et pour stocker les informations représentatives de l'état de transmission ou de réception du dispositif des dits canaux série de transmission/réception (A,B,C);
un circuit de description de sous-trames connecté au bus série interne pour fournir des signaux d'horloge dérivés en partie du bus série et pour traiter les signaux d'horloge pour fournir une information indicative de l'état des dits canaux de série de transmission/réception (A,B,C) pour l'ensemble de registres, les dits signaux d'horloge correspondant à au moins la fonction de fin de sous-trames;
et un circuit de validation des adresses et de commandes des sous-trames connectées au circuit du canal de transmission, au circuit du canal de réception, et à l'ensemble des registres pour examiner les adresses de sous-trames et pour fournir les signaux de validation et de commande à l'ensemble des registres correspondant à au moins une des fonctions de validation de réception des données, de validation de transmission de données, de fin de transmission et dans lequel au moins un des registres de l'ensemble des registres contient l'adresse destinataire et un bit de validation d'un des canaux (A,B,C) fonctionnant en transmission.

Selon une autre caractéristique, au moins un des registres de l'ensemble des registres contient l'adresse de la sous-trame utilisée par le canal en fonction de l'émission ou de la réception du circuit d'adaptation, et un bit de validation d'au moins un des canaux.

Selon une autre caractéristique, au moins un des registres de l'ensemble des registres contient les bits représentatifs des états de lignes du canal (A,B,C) fonctionnant en transmission.

Selon une autre caractéristique, au moins un des registres contient les bits représentatifs des états de lignes du canal (A,B,C) fonctionnant en réception.

Selon une autre caractéristique, le circuit comprend un registre d'états de synchronisation et d'états descripteur de sous-trames.

Selon une autre caractéristique, le circuit de transmission série pour chaque canal (A,B,C) comprend une pile FIFO associée avec un compteur du nombre de bits à transmettre, lui-même associé avec un registre de longueur de sous-trame dont le chargement est commandé par le signal de synchronisation de trame et le décalage par le signal d'horloge bit du bus, la sortie série du registre étant branchée en parallèle sur la sortie série de la pile FIFO, chacune de ces sorties étant successivement validée par un signal de validation de la longueur VAL-T-LG et respectivement des données VAL-T-DAT fourni par le circuit de validation des adresses et commandes.

Selon une autre caractéristique, le circuit de réception de chaque canal (A,B,C) est constitué d'une pile FIFO de réception recevant les données au rythme de l'horloge bit du bus, et d'un compteur des coups d'horloge bit chargé à zéro par le signal de synchronisation de trame et réinitialisé par le signal de RESET et un décompteur à entrée parallèle chargé par la longueur des données entrées dans la pile.

Selon une autre caractéristique, le circuit de validation des adresses et commandes comporte des moyens de valider chacune des phases en transmission ou en réception permettant de constituer une sous-trame.

D'autres caractéristiques et avantages de la présente invention apparaîtront plus clairement à la lecture de la description ci-après faite en référence aux figures annéxées dans lesquelles :
la figure 1 représente une vue schématique de la station de travail mettant en oeuvre le procédé et les dispositifs de l'invention ;
la figure 2 représente une vue schématique du bus interne de la station de travail et les principaux éléments fonctionnels en liaison avec le bus système de cette station ;
les figures 3a à 3c représentent les différentes interfaces de lignes téléphoniques susceptibles de constituer l'interface ILT de la figure 1 ;
la figure 4 représente la description d'une sous-trame permettant la mise en oeuvre du procédé de transmission ;
la figure 5 représente les différents types de sous-trames que l'on peut rencontrer ;
la figure 6 représente la description d'une sous-trame vide ;
la figure 7 représente le schéma de connexion du circuit d'adaptation utilisé dans la figure 2 ;
la figure 8A représente le schéma fonctionnel du circuit d'adaptation ;
la figure 8B représente le schéma fonctionnel du circuit de description de sous-trames inclu dans le circuit d'adaptation ;
la figure 8C représente le schéma fonctionnel du circuit de validation des adresses et des commandes inclu dans le circuit d'adaptation ;
la figure 8D représente le schéma fonctionnel de l'ensemble des registres du canal A inclu dans le circuit d'adaptation ;
la figure 8E représente le schéma fonctionnel de la partie du circuit de synchronisation d'horloge inclu dans le circuit d'adaptation.
la figure 9 représente le schéma fonctionnel du canal de transmission du circuit d'adaptation de la figure 8 ;
la figure 10 représente le canal de réception du circuit d'adaptation de la figure 8 ;
la figure 11 représente un diagramme des séquences des signaux générés par le circuit de description de sous-trames du circuit d'adaptation ;
la figure 12 représente un diagramme des séquences des signaux générés par le circuit de validation des adresses et des commandes du circuit d'adaptation ;
les figures 13, 14 représentent les schémas séquentiels lors d'une réception d'une sous-trame N+1 ayant six bits de données ;
les figures 15, 16 représentent les schémas séquentiels d'une transmission d'une sous-trame N+1 de trois bits de données ;
la figure 17 représente les séquences de traitement d'une fin de trame et d'un début de trame.

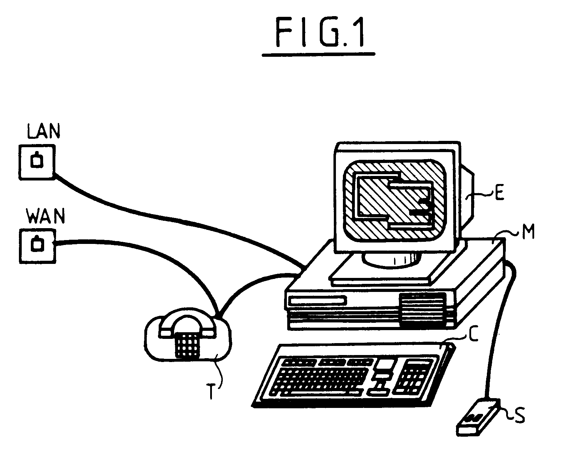

La figure 1 représente une station de travail du type micro-ordinateur ou miniordinateur comportant une unité centrale M, un écran E et un clavier C, et éventuellement une souris S. Il est connu dans la technique antérieure de relier ce type de station de travail à un réseau local LAN par des cartes coupleurs. Il est également connu de relier directement ce type de station de travail au réseau public PTT par des cartes de télécommunication type cartes commercialisées sous la marque "KORTEX". Les cartes du type "KORTEX", par exemple, n'assurent que la transmission de données et ne sont pas capables de traiter la voix ou les images. L'invention se propose de relier directement la station de travail à un téléphone T et au réseau public de télétransmission WAN, de façon à permettre la transmission ou la réception à la fois de messages vocaux ou de messages numériques, du type images ou données. Cette station de travail pourra être connectée indifféremment à une ligne téléphonique du type analogique, du type Transcom, ou du type RNIS. Au passage, nous rappelons que le Réseau Numérique à Intégration de Services (RNIS) dans un mode de fonctionnement, dit mode SO, comporte trois liaisons. La première est une liaison paquets à 16 Kbps et constitue le canal D de signalisation, les deux autres sont des liaisons full duplex de 64 Kbps.

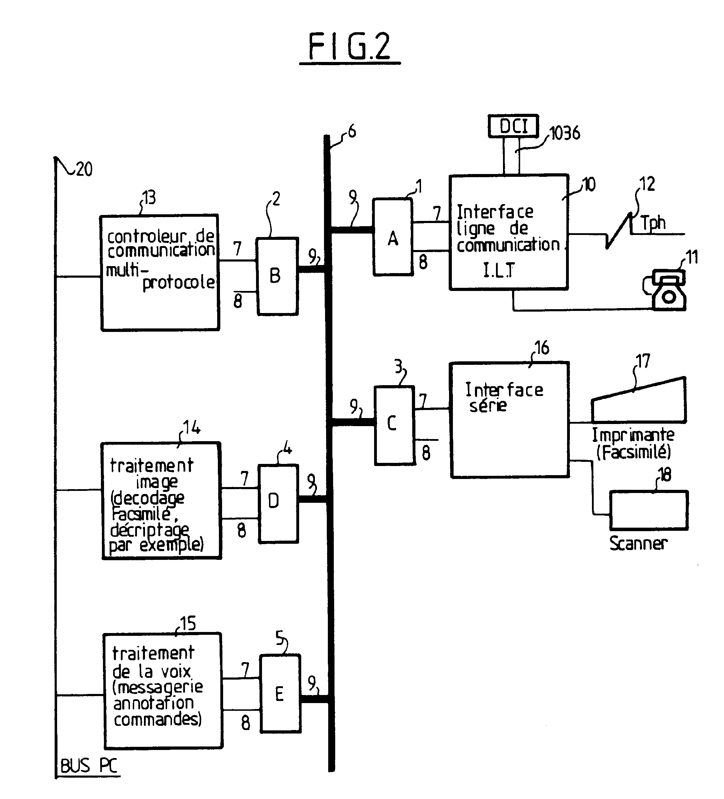

La figure 2 représente le bus interne de transmission de la station de travail permettant la gestion simultanée d'une communication téléphonique, une liaison de transmission de données en paquet ou une liaison facsimilée du groupe 4. Ces traitements sérialisés peuvent être faits pendant la transmission car des commutations directes entre coupleurs de lignes sont prévues comme on le verra par la suite.

Dans le schéma de la figure 1 illustrant un exemple de réalisation, cinq circuits d'adaptation (1) à (5) sont connectés au bus interne série (6). Chaque composant (1 à 5) est relié par ses entrées (9) au bus et comporte deux groupes de sorties (7) et (8) permettant à chacune de traiter un canal de transmission ou de réception. Ainsi, le circuit adaptateur (1) est relié par un canal de réception (7) et par un canal d'émission (8) à un circuit (10) d'interface de lignes de communication assurant le traitement des signaux reçus sur une ligne téléphonique (12). Ce circuit (10) émet sur un bus (1036) les signaux de signalisation de ligne et le canal de commande directement à destination du bus système (20) de la station de travail. Le circuit d'adaptation (2) est connecté par son canal de réception (7) et par son canal de transmission (8) à un circuit (13) contrôleur de communication multi-protocoles. Ce circuit contrôleur de communication multi-protocoles étant lui-même relié au bus système (20) de la station de travail. Le circuit d'adaptation (4) est relié par son canal de réception (7) et son canal de transmission (8) à un circuit de traitement d'images (14) assurant la compression et la décompression d'images, avec par exemple, décodage, codage, encryptage, ou transmission facsimilée, etc. Ce circuit (14) de traitement d'images est également relié au bus système de la station de travail. Le circuit d'adaptation (5) est connecté par son canal de réception (7) et son canal de transmission (8) à un circuit (15) de traitement de la voix permettant d'assurer des fonctions de messagerie, annotation, contrôle vocal de périphériques matériels ou logiques, etc. Ce circuit (15) de traitement de la voix est également connecté au bus système (20). Enfin, le circuit d'adaptation (3) est connecté à un circuit d'interface série (16) classique, qui est lui-même relié à une imprimante graphique (17) et un scanner d'images (18).

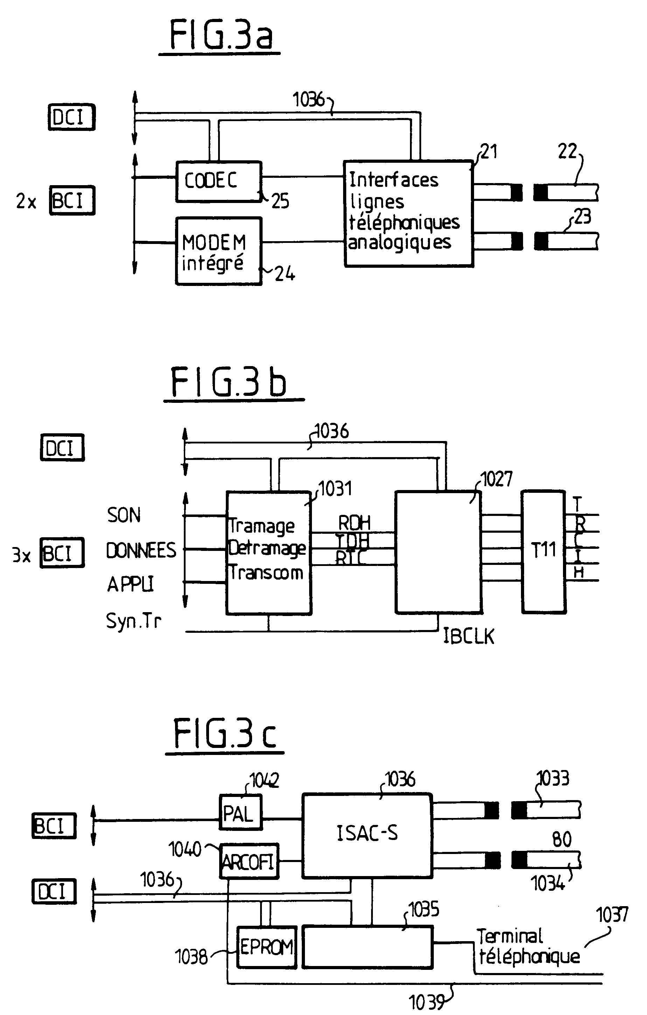

Aux figures 3a à 3c, on a représenté les schémas fonctionnels des différents types d'interfaces de ligne de communication qui pourront être réalisées par le circuit (10) selon le type de ligne téléphonique utilisé. Ces interfaces classiques pour l'homme de métier seront succinctement décrites. Pour une ligne téléphonique fonctionnant en mode analogique correspondant à la figure 3a, une interface de lignes téléphoniques, destinée à supporter l'invention, doit comporter plusieurs interfaces de pilotage (21) de chaque ligne téléphonique (22), (23) reliées à la station de travail. Ces interfaces sont connectées à un modem intégré (24) et à un circuit CODEC (25) (codeur/décodeur). Le CODEC (25) pourra être du type 29C50 commercialisé MHS ou INTEL. Le canal de signalisation (1036) permet au processeur central de recevoir ou de configurer des informations du type, décroché, suivi de tonalité, numérotation décimale, etc.

La figure 3b représente une interface adaptée au réseau Transcom de lignes téléphoniques, interfaces du type X21. Dans un tel réseau, les circuits de jonction de lignes T (transmission de données), R (réception de données), C (commande), I (indication) sont gérés en phase de commande de l'appel, ou en phase de libération par la station de travail au travers du bus interne (1036). Les commandes du processeur central sont fournies au circuit (1027) contrôleur de communication X21. Ce contrôleur pourra être le circuit HC-5542 commercialisé par la firme MHS. De même, le processeur central par l'intermédiaire du bus (1036) DCI d'interfaces de commandes fournit les commandes au circuit (1031) de tramage-détramage.

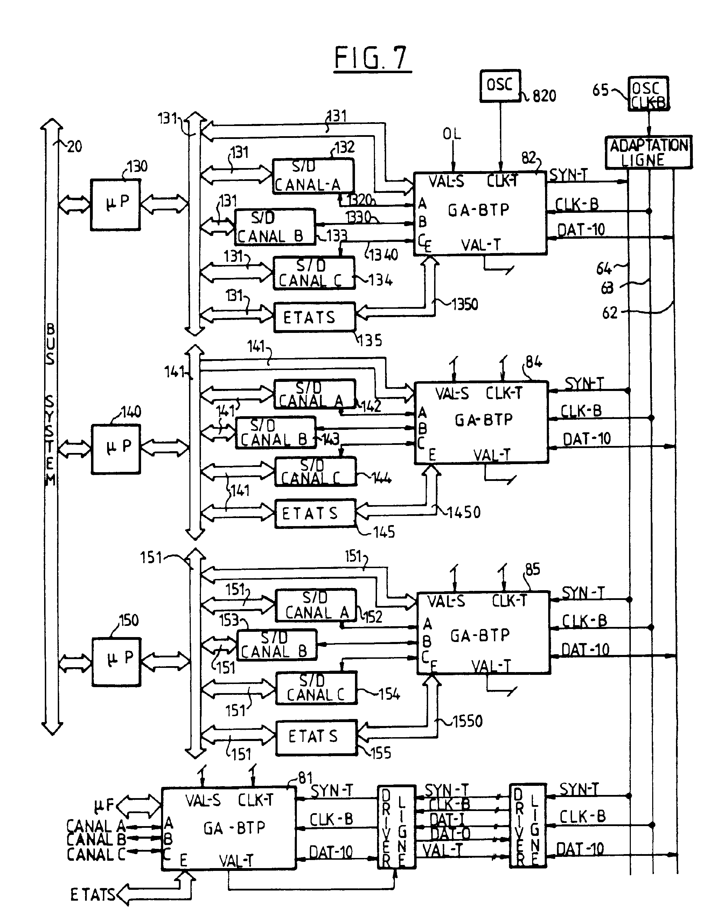

La figure 3c représente un mode de réalisation d'une interface de lignes téléphoniques du type SO pour un réseau RNIS. L'interface SO est à deux paires de lignes téléphoniques (1033, 1034). Un microprocesseur (1035) gère les échanges entre un poste téléphonique (1037) et le circuit d'attaque de ligne (1036) sous interface SO. Ce circuit (1036) pourra être constitué par le composant PEB2070 commercialisé par la firme SIEMENS. Une mémoire programmable (1038) du type EPROM contient le programme de contrôle local, et les données arrivent sur un bus (1039) à un circuit de traitement spécialisé (40) constitué par un circuit ARCOFI de référence PSB2160 commercialisé par SIEMENS. La signalisation est élaborée par le processeur (1035) de l'interface. Les signaux de données sont transmis sur le bus par la ou les sorties BCI qui selon les circuits d'interfaces de ligne téléphonique sont au nombre de deux pour le circuit analogique, au nombre de trois transmettant respectivement le son, les données et les applications pour le circuit type Transcom. Les signaux transmis par le canal d'interface BCI constituent le bus (6) qui est en fait constitué, comme représentés à la figure 7, par une ligne (62) de données en entrées et en sorties, une ligne (64) transmettant le signal de synchronisation de trame et une ligne (63) transmettant l'horloge bit qui est fournie par un oscillateur (65) de fréquence choisie entre 512 et 2048 KHz selon les trames que l'on souhaite transmettre sur le bus (6).

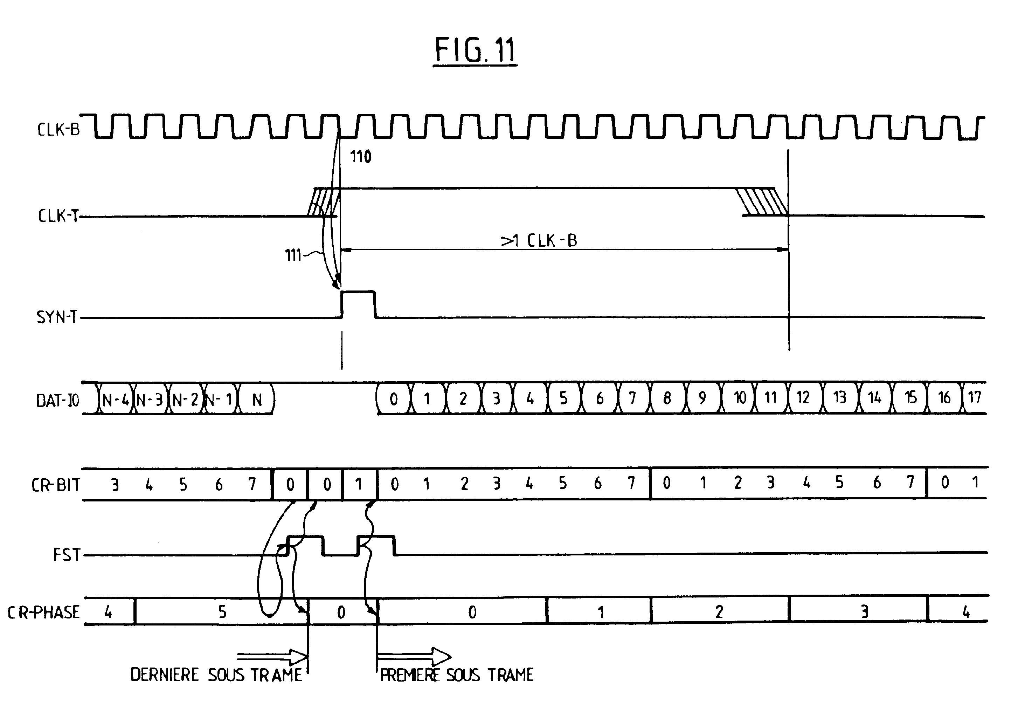

Le bus temporel privé (6) est structuré en trames de 125 microsecondes (8 KHz) aux normes du réseau public. Le circuit d'adaptation au bus (circuit 1 à 5) mémorise les données reçues entre deux signaux de synchronisation de trames. Si le nombre de bits reçus dans une trame est compris entre 0 et 8, le composant émet sur le bus ces bits à la fréquence de 64 Kbps ; si le nombre de bits reçus est supérieur à 8 entre deux signaux de synchronisation de trame (transmission supérieure à 64 Kbps), le circuit d'adaptation émet sur le bus les bits à la fréquence horloge du bus (CLK-B) entre 512 et 2048 KHz. La synchronisation trame provient du signal de synchronisation généré par l'interface ligne à partir du signal (CLK-T) de synchronisation de transmission du réseau public en le synchronisant sur l'horloge du bus (CLK-B), comme représenté par les flèches (110, 111, fig.11).

La ligne de données DAT-IO constitue le bus véhiculant les sous-trames émises par l'ensemble des composants d'adaptation comme on va le voir ci-après.

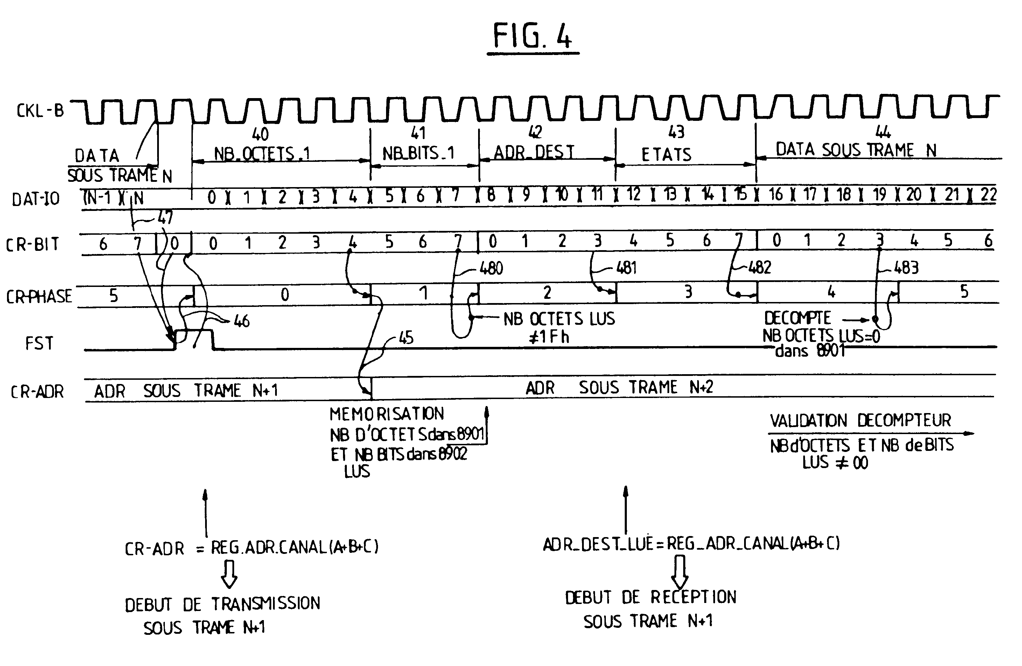

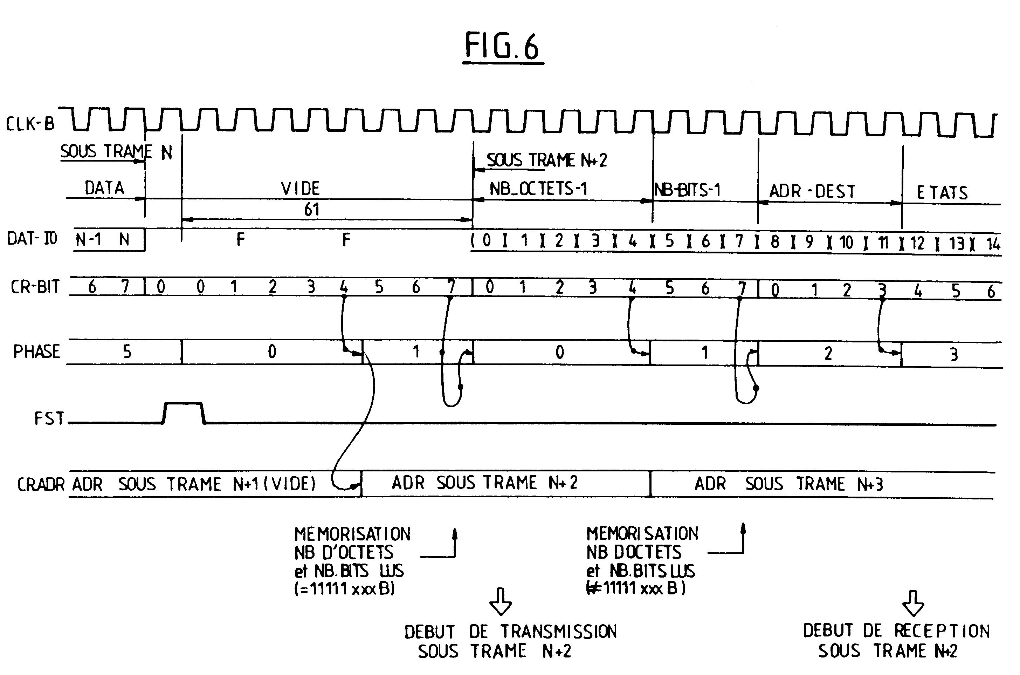

Comme représenté à la figure 4, une sous-trame N+1 succédant à une sous-trame N est constituée d'une zone (40) de cinq bits indiquant le nombre d'octets moins un de la sous-trame. Cette zone de cinq bits (40) est suivie d'une zone de trois bits (41) indiquant le nombre de bits moins un du dernier octet de la sous-trame. L'ensemble des zones (40), (41) constitue le premier octet de la sous-trame qui indique la longueur de la sous-trame considérée. Le deuxième octet de la sous-trame comporte une zone (42) de quatre bits constituant l'adresse destinataire, c'est-à-dire l'adresse du circuit d'adaptation ou du circuit de traitement auquel les données contenues dans la sous-trame sont destinées. Les quatre derniers bits du deuxième octet constituent la zone (43) et contiennent des informations d'état. Enfin, la sous-trame se termine par une zone (44) constituant la zone de données de la sous-trame, cette zone de données pouvant être de longueurs variables comme on va le voir en liaison avec la figure 6.

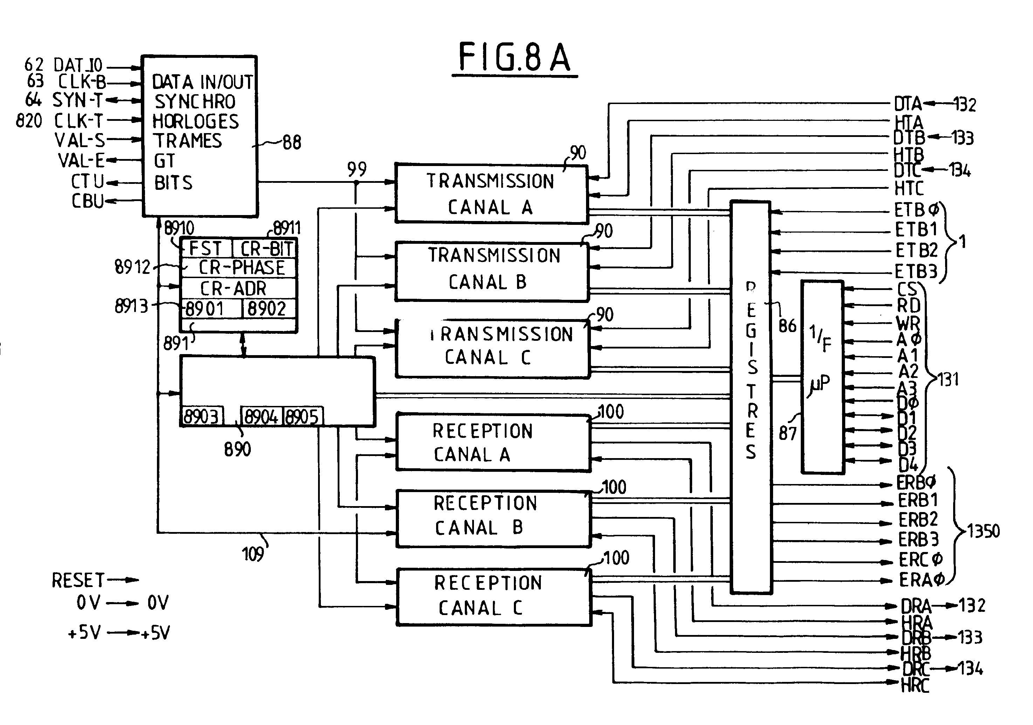

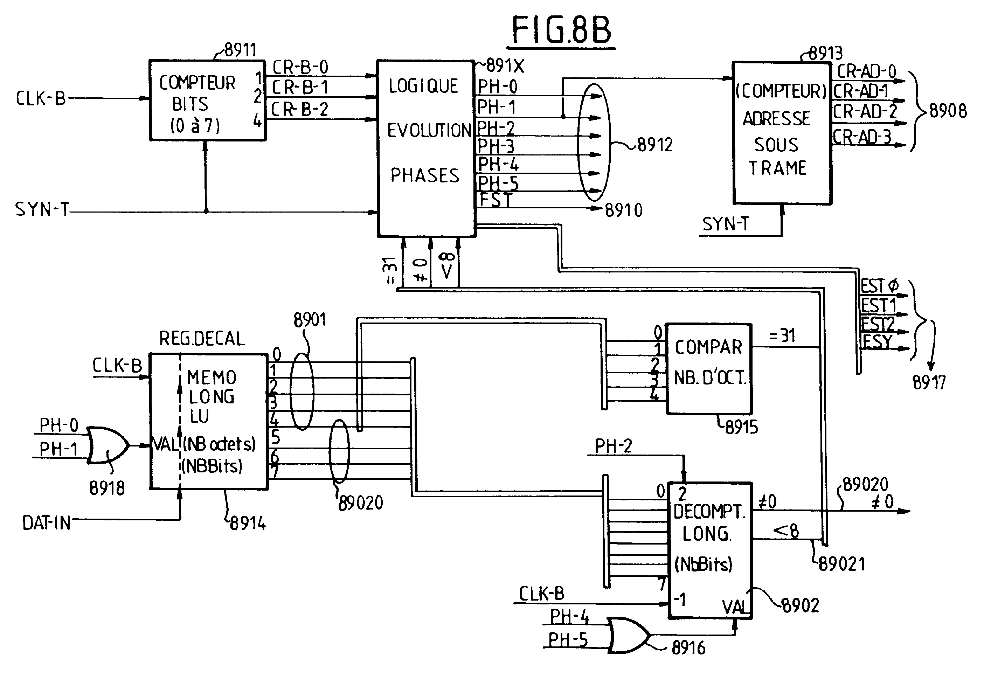

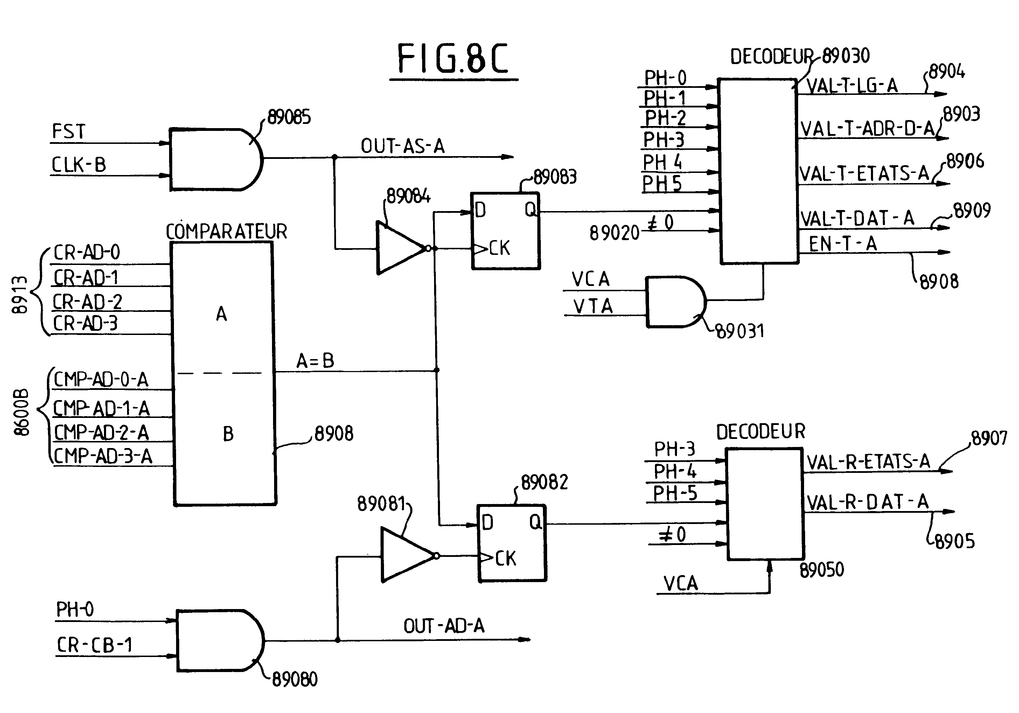

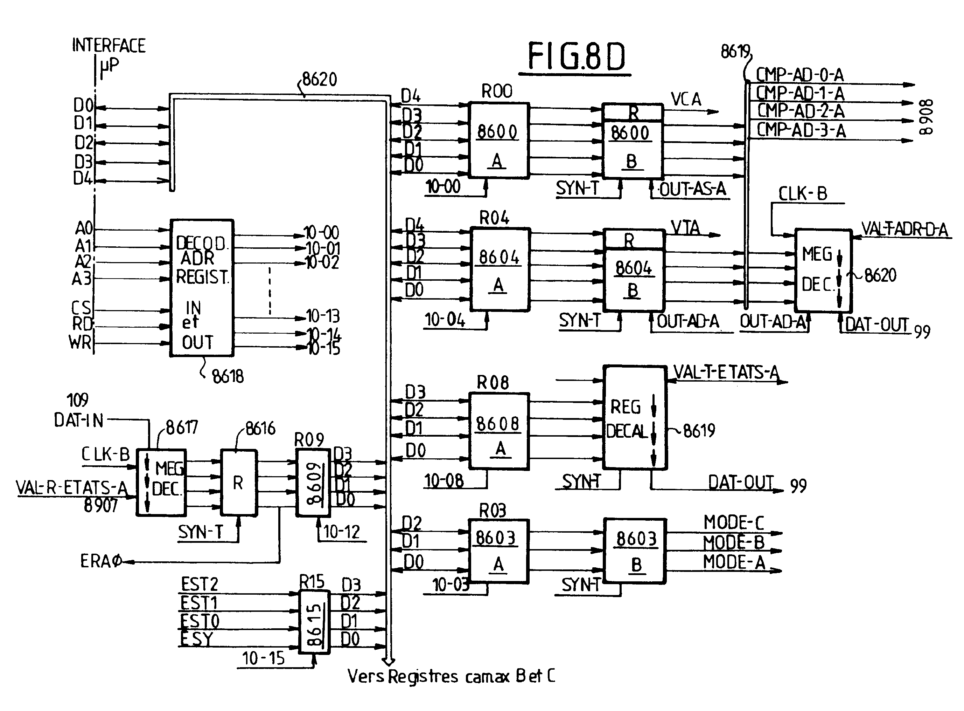

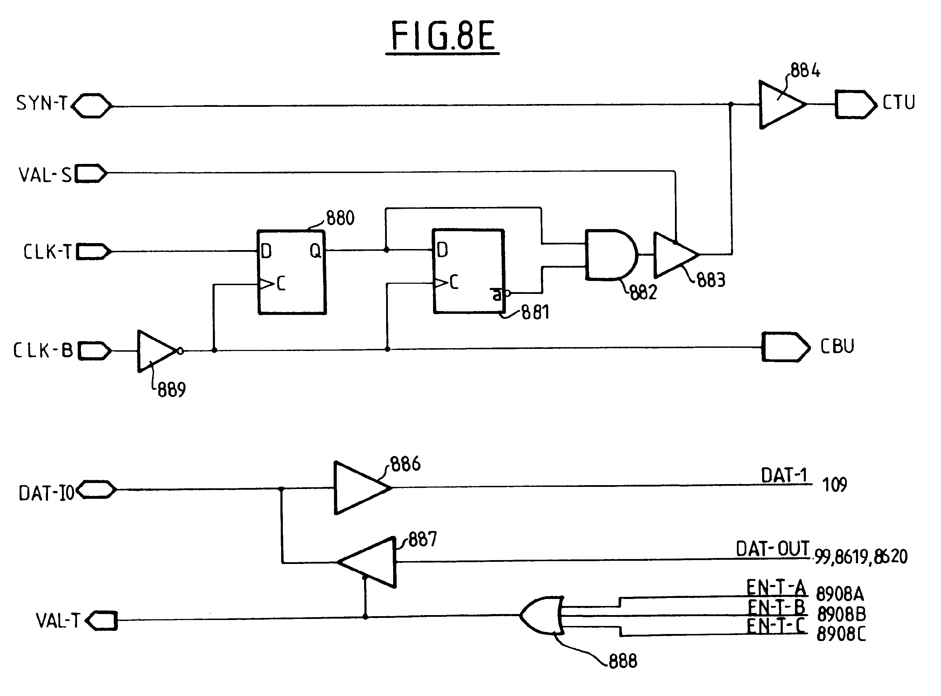

La ligne CR-BIT de la figure 4 représente l'état d'un registre compteur de bits (8911, fig. 8) qui permet de compter les octets dans chaque sous-trame. Comme on peut le voir sur cette figure, ce registre compteur de bits est remis à zéro soit au bout de huit coups d'horloge CLK-B, soit d'une impulsion FST, impulsion de synchronisation de sous-trame, et de la valeur "5" indiquant la fin de la cinquième phase de la sous-trame N, comme représenté par les flèches (46, fig. 4). La ligne CR-PHASE de la figure 4 représente les valeurs successives d'un compteur de phase (8912) pour une sous-trame. L'impulsion FST est produite sur le front montant de l'horloge CLK-B qui suit le passage du compteur de bit (CR-BIT) de la valeur "7" à la valeur "0" au cours de la phase "5" d'une sous-trame, comme représenté par les flèches (47) de la figure 4. Ainsi, comme on le verra ultérieurement, le microprocesseur et le circuit d'adaptation au cours des phases 0, 1, 2, 3, 4 et 5 ont des comportements différents. Les différentes valeurs du compteur de phase sont définies de la façon suivante :
- Le compteur de phase (8912) passe de la valeur "0" à la valeur "1" lorsque le compteur de bit (8911) a compté le 4ème bit (flèche 45).
- Le compteur de phase (8912) passe de la valeur "1" à la valeur "2" (flèche 480) lorsque le compteur de bit (8911) a compté le 8ème bit et si la valeur lue dans la zone (40), qui contient le nombre d'octets du message reçu ou à transmettre, est différente de la valeur hexadécimale "1F". Cette valeur "1F" indique qu'une sous-trame est "vide", en d'autres termes, ne contient pas de donnée.
- Le compteur de phase (8912) passe de la valeur "2" à la valeur "3" (flèche 481) lorsque le compteur de bit (8911) a compté le 4ème bit dans le deuxième octet.
- Le compteur de phase (8912) passe de la valeur "3" à la valeur "4" (flèche 482) lorsque le compteur de bit (8911) a compté le 8ème bit dans le deuxième octet.
- Enfin, le compteur de phase (8912) passe de la valeur "4" à la valeur "5" (flèche 483) lorsque le compteur de bit a compté le 4ème bit suivant le passage à la valeur "0" d'un décompteur (8901, fig. 8) chargé par la valeur de la zone (40) et décrémenté de 1 chaque fois que le compteur de bit (8911) a compté un octet à partir du moment où on est en phase 4. Ce décompteur (8901) représente à tout instant le nombre d'octets restant à lire dans une sous-trame et se trouve chargé à la fin de la phase 1, ainsi que le décompteur (8902) contenant le nombre de bits restant à lire dans le dernier octet de donnée. Ce décompteur (8902) est décrémenté de 1 à chaque coup d'horloge (CLK-B) pendant la phase 5.

Enfin, la ligne CR-ADR représente les valeurs successives d'un registre de comptage des adresses (8913, fig. 8) qui mémorise l'adresse de la sous-trame dont le traitement sera abordé ultérieurement après la cinquième phase. Le registre d'adresses est incrémenté chaque fois que le compteur de bits indique la fin de la première zone (40) du premier octet d'une sous-trame, et que le compteur de phases passe de la valeur "0" à la valeur "1" comme représenté par la flèche (45) à la figure 4. Ainsi, à la transition entre le quatrième et le cinquième bit du compteur, le compteur d'adresse passe de l'adresse de la sous-trame N+1 à l'adresse de la sous-trame N+2.

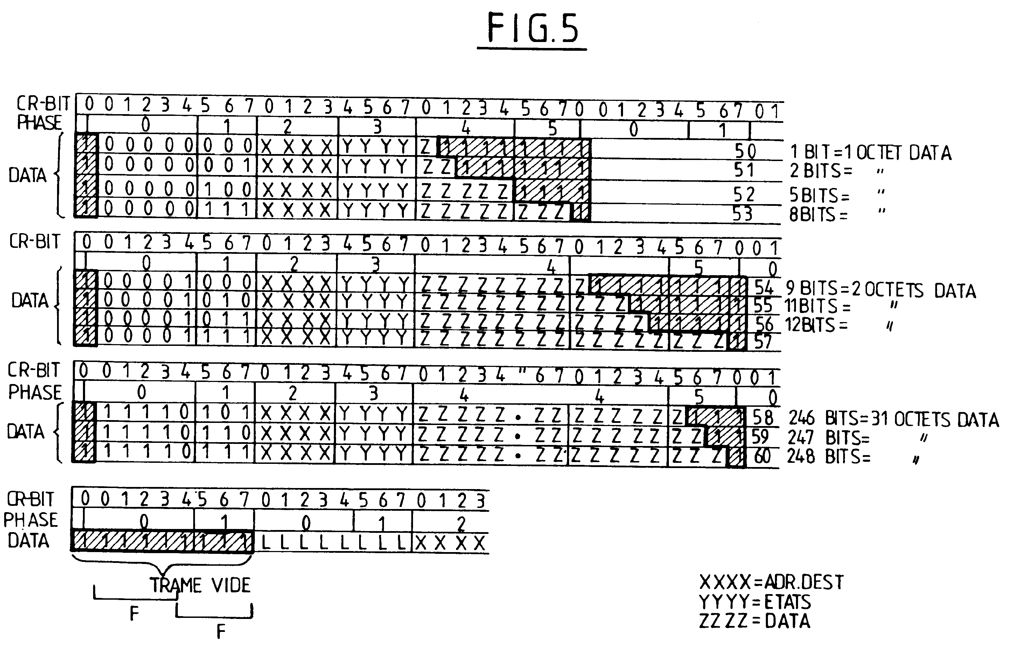

Sur la figure 5, on a représenté les valeurs du registre compteur de bits CR-BIT, du registre compteur du nombre de phases exécutées par le circuit de traitement du composant d'adaptation ou du microprocesseur et la ligne 50 représente la structure d'une sous-trame ayant un bit de données, la ligne 51 une sous-trame ayant deux bits de données, la ligne 52 cinq bits de données, la ligne 53 huit bits de données. Les données sont représentées par la lettre Z, les états sont représentés par la lettre Y, et les adresses destinataires par la lettre X. On constatera que le nombre de bits de données est en accord avec la deuxième zone du premier octet correspondant à la phase 1. En effet, dans cette phase 1, ces trois bits définissent, le nombre de bits moins un du dernier octet. Les lignes 54, 55, 56, 57 représentent l'allure d'une sous-trame dans le cas où elle comporte respectivement 9, 11, 12 ou 15 bits de données. Enfin, les lignes 58, 59, 60 représentent la structure d'une sous-trame dans lesquelles la phase 4 s'étend sur plusieurs octets et les données comportent 31 octets de données, la ligne 58 comporte 246 bits de données, la ligne 59, 247 bits de données, la ligne 60 comporte le maximum, 248 bits de données. Dans ce cas, la sous-trame comporte 32 octets qui correpondent à une horloge CLK-B 32 x 8 x 8 = 2048 KHz. Dans le cas où l'horloge bits CLK-B est à 2048 KHz, le nombre d'octets entre deux signaux de synchronisation est de 31 maximum, et le bus de données peut véhiculer par exemple au maximum 31 octets de données dans une trame ou 10 sous-trames de un octet de données chacune, soit quatre liaisons de 64 Kbps en full duplex compte tenu de l'adressage qui est sur trois bits, ou trois sous-trames de un octet de données chacune et une sous-trame de 22 octets de données, ou six sous-trames de un octet de données, une sous-trame de quatre octets de données et une sous-trame de cinq octets de données. Il est bien évident que les exemples ci-dessus sont donnés à titre illustratif et ne constituent pas une limitation de l'invention.

La figure 6 représente une sous-trame N+1 dite vide. Cette sous-trame vide est représentée par la zone (61) pendant laquelle la ligne DATA-I0 est en permanence au niveau "1" qui représente pour l'octet considéré le code hexadécimal FF.

La figure 7 représente une vue plus détaillée de la partie du schéma de la figure 2 située entre le bus interne (6) qui est un bus série, et le bus système (20) qui est un bus parallèle. Le bus temporel privé (6) est constitué principalement d'une ligne d'entrées-sorties de données (62), d'une ligne (63) d'horloge de bits CLK-B et d'une ligne (64) de synchronisation de trames. Le bus est relié à chacun des circuits adaptateurs qui seront décrits en détail à l'aide des figures 8, 9 et 10. Le chiffre des dizaines désignant chaque circuit adaptateur de la figure 7 correspond à la figure 8, et le chiffre des unités correspond à la place occupée par le circuit dans le schéma de la figure 2. Ainsi, le circuit (82) et le circuit adaptateur, réalisant l'adaptation entre le bus (6) et le circuit (13) contrôleur de communications multiprotocoles. Sur la figure 7, les éléments appartenant au circuit contrôleur de communications multi-protocoles ont pour chiffres des centaines et des dizaines, le chiffre 13 et les unités permettent de désigner les éléments de ce circuit propre à l'invention. Ainsi, la référence 130 désigne le microprocesseur contrôleur de communications multi-protocoles, ce microprocesseur est relié d'une part au bus système (20), d'autre part par un bus (131), directement au circuit d'adaptation (82) et par l'intermédiaire d'un circuit sérialisateur-désérialisateur (132) à l'entrée-sortie série (1320)du canal A du circuit d'adaptation (82). Ce microprocesseur (130) est également relié par un circuit sérialisateur-désérialisateur (133), à l'entrée-sortie série (1330) du canal B du circuit adaptateur (82). Ce microprocesseur (130) est également relié par un circuit sérialisateur (134) désérialisateur (134) à l'entrée-sortie série (1340) du canal C du circuit d'adaptation (82). Un circuit tampon d'état (135) est relié d'une part au bus (131), d'autre part par un bus (1350) au circuit d'adaptation (82). Une horloge (820) de fréquence 8 KHz est reliée à l'entrée d'horloge de trame (CLK-T) du circuit (82) pour générer les impulsions de début et fin de trame lors d'une transmission.

Le même schéma se retrouve également pour le microprocesseur (140) du circuit de traitement d'images (14), et les références sont simplement décallées d'une dizaine, il en de même pour le microprocesseur (150) du circuit de traitement de la voix (15).

La figure 8 représente donc un circuit adaptateur (82), (84), (85) ou (81) permettant de réaliser l'adaptation entre le bus temporel privé (6) et les circuits de traitement de données d'images, de voix ou d'interfaces de lignes téléphoniques, ou tout autre circuit connecté au bus système (20) ou au bus temporel (6) de la station de travail. Ce circuit d'adaptation comprend trois circuits de transmission (90) pour chacun des canaux A, B et C, et également trois circuits de réception (100) pour chacun des canaux A, B et C que comporte ce circuit d'adaptation. Chaque canal du circuit de transmission reçoit ses signaux de données sur une ligne respective 132, 133, 134, et un signal d'horloge provenant du bus système HTA, HTB, HTC, ainsi que des informations provenant d'un ensemble de registres (86). Cet ensemble de registres (86) reçoit sur ses entrées ETB0 à ETB3 les états de transmission du canal B, sur les entrées ERB0 à ERB3 les états de réception du canal B, sur les entrées ERC0 et ERA0 les états de réception du canal A et C. Ces différents signaux d'état sont transmis par le bus (1350). Ce circuit comprend également une interface d'entrée-sortie (87) entre le registre (86), et le microprocesseur associé (13). Cette interface (87) reçoit les signaux du microprocesseur (130) véhiculés par le bus (131). Les entrées A0 à A3 représentent les adresses des 16 registres (86) envoyées par le microprocesseur (par exemple 130) auquel est relié le circuit d'adaptation (82).

Cette interface (87) reçoit ou émet les données sur ces entrées-sorties D0 à D4, les données lues ou écrites dans les registres (86), ces données étant constituées de mots de cinq bits. Cette interface (87) comporte une entrée CS de validation de la lecture et de l'écriture, une entrée RD constituant le strobe de lecture des registres et l'entrée WR constituant le signal de commande (strobe) d'écriture des registres. Les circuits de réception de chaque canaux A, B et C émettent également respectivement les données reçues sur les lignes respectives (132, 133, 134) et l'horloge pour chaque canal HRA, HRB, HRC. Ces données et cette horloge étant émises en direction du circuit (130). Le circuit de transmission (90) pour chaque canal A, B, C sont reliés en parallèle par une ligne (99), à un circuit (88) d'interface d'entrée-sortie série comportant une entrée-sortie DAT-IO (82), une entrée CLK-B reliée à la ligne (63) et une sortie SYN-T reliée à la ligne (64). Ce circuit (88) comporte également une entrée CLK-T horloge pour trames non synchronisées, cette entrée étant utilisée si l'entrée VAL-S est validée.

L'entrée VAL-S constitue la validation de la synchronisation pour l'horloge (820) CLK-T, dans le cas où l'on ne souhaite pas utiliser l'horloge de synchronisation trame SYN-T. Les circuits de réception (100) sont reliés par une ligne (109) au circuit (88). Cette ligne (109) est également reliée à un circuit (891) de description de sous-trame et un circuit (890) de validation d'adresses et de commandes. Le circuit (891) de description de sous-trame comporte, comme on l'a vu précédemment, en plus des circuits logiques associés, le circuit (891X) dont la sortie (8910) de génère le signal de fin de sous-trame (FST), le circuit (8911) de comptage des bits, le circuit (891) de comptage de phases de la sous-trame dont les sorties (8912) indiquent les phases de traitement de la sous-trame et le circuit (8913) de comptage d'adresses.

Le circuit de description de sous-trame (891) est représenté de façon plus détaillé à la figure 8B. Ce circuit comporte un compteur de bits (8911) dont l'entrée reçoit le signal d'horloge CLK-B, ce compteur étant réinitialiser à zéro par le signal SYN-T envoyé sur son entrée reset. Le compteur (8911) compte de 0 à 7 et produit sur ses trois sorties CR-B-0, CR-B-1, CR-B-2 les signaux représentatifs du nombre de bits reçus ou transmis qui ont été comptés. Ces sorties sont envoyées sur un circuit logique (891X) constitué par un circuit logique programmable dont les sorties (8912) indiquent les six phases de traitement d'une sous-trame et la sortie (8910) délivrent le signal FST de fin de sous-trame. Ce circuit logique (891X) reçoit sur une de ses entrées le signal SYN-T de synchronisation de trame sur une deuxième entrée un signal délivré par la sortie d'un circuit (8915) indiquant que le nombre d'octets lus est égal au nombre d'octets maximum moins un que peut contenir une trame, en l'occurence 31, sur une troisième entrée un signal indiquant que le nombre de bits restant à lire est différent de zéro et sur une quatrième entrée un signal indiquant que ce nombre de bits restant à lire est inférieur à huit. Ce premier signal est délivré par la sortie (89020) du circuit (8902) et le deuxième signal par la sortie (89021) du circuit (8902). Ce circuit (8902) est un décompteur dont les huit entrées parallèles reçoivent les huit sorties d'un registre à décalage (8914) ; ce décompteur reçoit sur son entrée de décrémentation, le signal d'horloge CLK-B et reçoit sur son entrée de validation, le signal de sortie d'une porte NON-OU (8916) dont les deux entrées reçoivent respectivement le signal de début de la quatrième phase et la deuxième entrée le signal de début de la cinquième phase du traitement d'une sous-trame. Le chargement de ce décompteur (8902) est commandé par le signal de PH-2 de début de la phase 2 de la sous-trame. Le registre à décalage (8914) à entrées série et sorties parallèles reçoit en entrée le signal DAT-IN. Ce registre à décalage reçoit sur son entrée de validation la sortie d'une porte NON-OU (8918) qui reçoit sur une première entrée le signal PH-0, et sur une deuxième entrée le signal PH-1 représentant respectivement les débuts des phases 0 et 1 de traitement de la sous-trame. Les informations chargées pendant ces phases 0 et 1 représentent le nombre d'octets à lire et le nombre de bits à lire, et ces informations sont décalées dans le registre au rythme de l'horloge CLK-B. Les cinq sorties (8901), de poids les plus élévées de ce registre à décalage (8914), sont envoyées sur les cinq entrées d'un circuit comparateur du nombre d'octets à lire (8915). Ce comparateur est cablé de façon à délivrer un signal sur sa sortie lorsque le nombre d'octets lus est égal à 31. Quatre sorties supplémentaires du circuit logique (891X) constituent les quatre signaux EST0, EST1, EST2 et ESY délivrant respectivement les états des sous-trames et l'état de synchronisation. Ces signaux délivrés par les sorties (8917) sont envoyés sur les entrées du registre (8615) de la figure 8D. La sortie PH-1 du circuit (891X) représentant le début de la phase 1 d'une sous-trame est envoyée sur l'entrée de comptage d'un compteur (8913) dont les cinq sorties CR-AD-0 à CR-AD-4 constituent l'adresse de sous-trame et sont envoyées sur les entrées correspondantes du comparateur (8908) de la figure 8C. Ce compteur (8913) a son entrée de réinitialisation relié au signal SYN-T pour permettre sa réinitialisation en début de trame.

La figure 8C représente le circuit de validation des adresses et des commandes référencé (890) à la figure 8A. Ce circuit comporte un circuit comparateur (8908) comparant l'adresse de la sous-trame reçue avec les cinq sorties CMP-AD0 à CMP-AD3 délivrées par les sorties du registre (8600-B) représentant le registre R00 pour le canal A. Ces entrées peuvent être également dans le cas du canal B constituées par les sorties du registre (8601-B), ou pour le cas du canal C par les sorties du registre (8602-B). La sortie indiquant la similitude des entrées du comparateur (8908) est envoyée sur chacune des entrées D de deux bascules (89083 et 89082). La bascule (89082) reçoit sur son entrée d'horloge la sortie d'un inverseur (89081) dont l'entrée reçoit la sortie d'une porte NON-ET (89080). Cette porte ET reçoit sur sa première entrée le signal PH-O représentatif du début de la phase 0 d'une sous-trame, et sur sa deuxième entrée le signal CR-B-1 constituant la sortie de poids 1 du compteur de bits (8911) indiquant que l'on est en train de traiter les bits 2 à 3 de la phase 0 d'une sous-trame. La sortie de cette porte ET (89080) délivre le signal OUT-ADA qui permet d'effectuer le chargement du registre à décalag (8620) de la figure 8D pour préparer ce dernier à émettre en série les signaux d'adresse sous-trame à transmettre, dès que le signal VAL-T-DR-DA aura été émis par le circuit décodeur (89030). La sortie Q de la bascule (89082) indique que l'on n'est pas en train de traiter dans la sous-trame correspondant aux adresses souhaitées, la partie adresse du destinataire de la sous-trame.

La deuxième bascule (89083) reçoit sur son entrée d'horloge la sortie d'un circuit inverseur (89084) dont l'entrée reçoit la sortie d'une porte ET (89085). Cette porte ET (89085) reçoit sur une première entrée le signal FST délivré par la sortie (8910) du circuit logique (891X) et sur sa deuxième entrée, le signal CLK-B délivré par la ligne (63) du bus privé (6). La sortie de cette ET (89085) délivre le signal OUT-ASA qui est utilisé à la figure 8D pour valider la sortie du registre (8600-B) contenant l'adresse sous-trame pour le canal A. Ceci permet de transmettre cette adresse sous-trame au comparateur au tout début de la phase 0 d'une sous-trame, et par conséquent, d'être en mesure de comparer cette valeur avec l'adresse sous-trame reçue dès le début de la sous-trame, puisque comme on peut le voir à la figure 4, le compteur d'adresse sous-trame (8913) est incrémenté lors du début de la phase 1 de traitement de la sous-trame précédente.

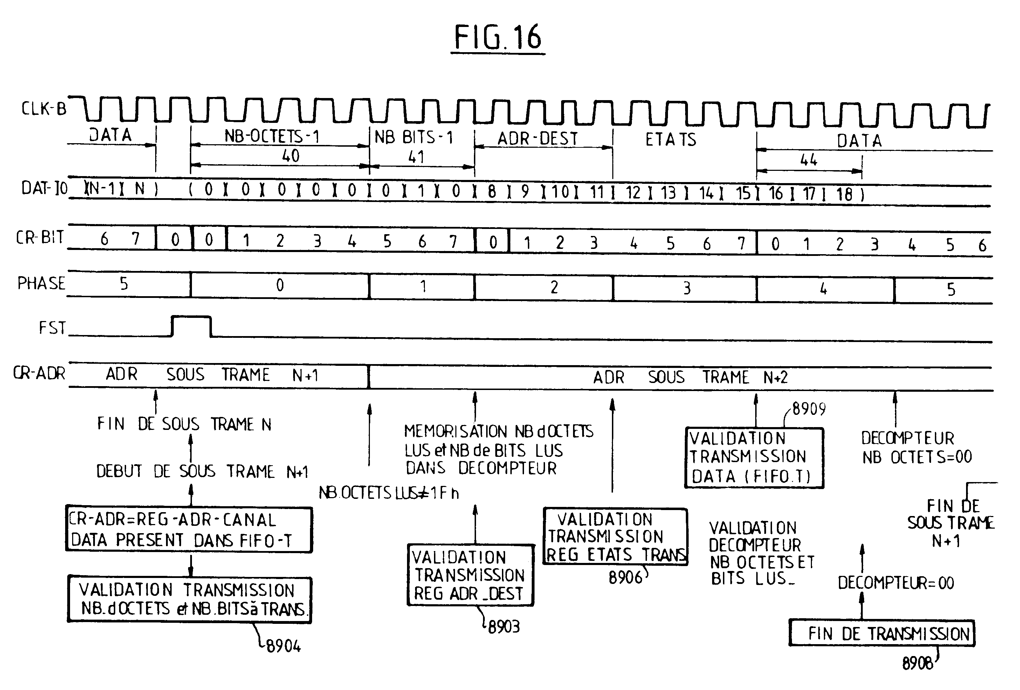

La sortie Q de la bascule (89083) est envoyée sur une entrée d'un circuit décodeur (89030) qui reçoit sur ces six autres entrées les six signaux indicatifs de la phase de traitement d'une sous-trame PH-O à PH-5, et sur une entrée supplémentaire, le signal émis par la sortie (89020) du décompteur de longueur, signal indicatif que le nombre de bits est différent de zéro. Ce décodeur (89030) délivre en fonction des signaux reçus en entrée sur sa sortie (8904) le signal VALT-LG-A qui est le signal de validation pour le canal A de la longueur de la sous-trame, longueur constitué du nombre d'octets et du nombre de bits à transmettre comme indiqué dans la référence (8904, figure 16). la sortie (8903) délivre le signal VAL-T-ADRESSE-D-A qui est le signal de validation pour la transmission du registre adresse destinataire indiqué par la référence (8903, figure 16). La sortie (8906) délivre le signal VAL-T-ETAT-A qui est le signal de validation en transmission du registre des états à transmettre, cette validation se produisant à la fin de la phase 2, comme représenté figure 16. La sortie (8909) délivre le signal VAL-T-DAT-A qui est le signal de validation en transmission des données à transmettre pour le canal A, ce signal est émis à la fin de la phase 3 et au début de la phase 4, comme indiqué figure 16, et enfin, la sortie EN-T-A et le signal indiquant la fin de transmission, délivré par la sortie (8908) est émis au cours de la phase 4 lorsque le décompteur (8902) passe à zéro. Le décodeur (89030) reçoit sur son entrée de validation, la sortie d'une porte ET (89031) recevant sur une première entrée le signal VCA de validation du canal A constitué, comme on le verra ultérieurement, par le premier bit du registre (8600-B) de la figure 8D, et sur sa deuxième entrée le signal VTA qui est le signal de validation en transmission du canal A, signal constitué par le premier bit du registre (8604-B) de la figure 8D. Ainsi, le décodeur (89030) n'est validé que si le canal A associé doit fonctionner en transmission. De même, pour le canal B et pour le canal C, on retrouvera un décodeur correspondant. Le comparateur (8908) est quant à lui branché en parallèle sur le bus (8619) qui reçoit les sorties parallèles des trois registres (8601-B, 8602-B) indiquant respectivement les adresses des sous-trames pour les canaux A, B et C. En cas de coïncidence, les canaux correspondants ne seront validés que si les registres contiennent les bits de validation VCB, VCC, VTB et VTC associés.

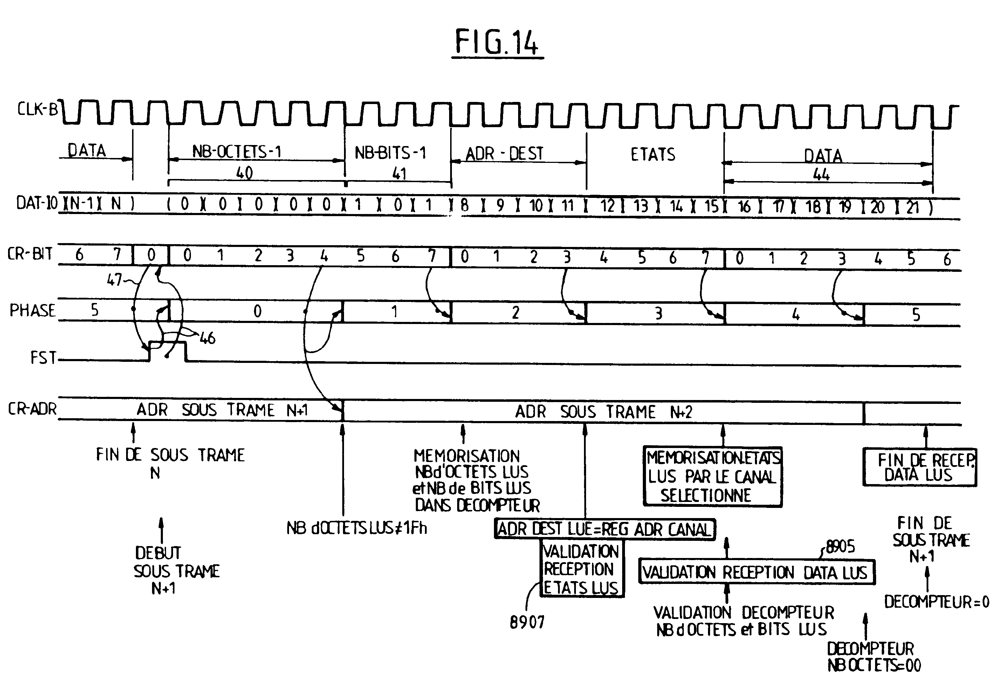

La sortie Q de la bascule (89082) est envoyée sur une entrée d'un circuit décodeur (89050) dont les trois autres entrées reçoivent les signaux PH-3 à PH-5 indiquant les phases de traitement 3 à 5 d'une sous-trame, et une dernière entrée reçoit le signal provenant de la sortie (89020) indiquant que la longueur restant à lire n'est pas nul. Ce décodeur reçoit sur son entrée de validation le signal VCA constitué par le bit de validation du canal A, signal stocké dans le registre (8600-B) de la figure 8D. Une première sortie (8907) de ce décodeur délivre le signal VAL-R-ETAT-A qui est le signal de validation en réception des états lus représenté par la référence (8907) à la figure 14, signal produit à la fin de la phase 2. La deuxième sortie (8905) de ce décodeur (89050) délivre le signal VAL-R-DAT-A qui est le signal de validation en réception des données lues, signal délivré comme représenté par la référence (8905, figure 14) à la fin de la phase 3 de traitement d'une sous-trame.

Les 16 registres 86 contiennent les informations suivantes.
R00 : Registre adresse sous-trame pour canal A (transmission et réception)
. VCA = validation canal A
. ASAø:ASA3 = adresse sous-trame
R01 : Registre adresse sous-trame pour canal B (transmission et réception)
. VCB = validation canal B
. ASBø:ASB3 = adresse sous-trame
R02 : Registre adresse sous-trame pour canal C (transmission et réception)
. VCC = validation canal C
. ASCø:ASC3 = adresse sous-trame
R03 : Registre mode pour les canaux A, B et C
. Définition du mode horloge réception interne ou externe
R04 : Registre adresse destinataire : bits 4 à 7 du deuxième octet de la sous- trame transmise par le canal A.
. VTA = validation transmission
. ADAø:ADA3 = adresse destinataire
R05 : Registre adresse destinataire : bits 4 à 7 du deuxième octet de la sous- trame transmise par le canal B.
. VTB = validation transmission
. ADBø:ADB3 = adresse destinataire
R06 : Registre adresse destinataire : bits 4 à 7 du deuxième octet de la sous- trame transmise par le canal C.
.VTC = validation transmission
. ADCø:ADC3 = adresse destinataire
R07 : Réserve
R08 : Registre états transmission canal A : bits ø à 3 du deuxième octet de la sous-trame transmise par le canal A.
. ETAø:ETA3 = états à transmettre
R09 : Registre états transmission canal B : bits ø à 3 du deuxième octet de la sous-trame transmise par le canal B.
. ETBø:ETB3 = états à transmettre
R10 : Registre états transmission canal C : bits ø à 3 du deuxième octet de la sous-trame transmise par le canal C.
. ETCø:ETC3 = états à transmettre
R11 : Réserve
R12 : Registre états réception canal A : bits ø à 3 du deuxième octet reçu par le canal A.
. ERAø:ERA3 = états réception
R13 : Registre états réception canal B : bits ø à 3 du deuxième octet reçu par le canal B.
. ERBø:ERB3 = états réception
R14 : Registre états réception canal C : bits ø à 3 du deuxième octet reçu par le canal C.
. ERCø:ERC3 = états réception
R15 : Registre status
. ESY = état synchronisation
0 = reset ou non synchronise
1 = GA-BTP synchronise (détection de 2 phases 1 et SYN-T)
. EST = état sous-trame
Etat du descripteur de sous-trame mémorise par SYN-T.

La figure 8D représente l'ensemble des registres associés à un canal, en l'occurence le canal A et les signaux de commande associés de ces registres.

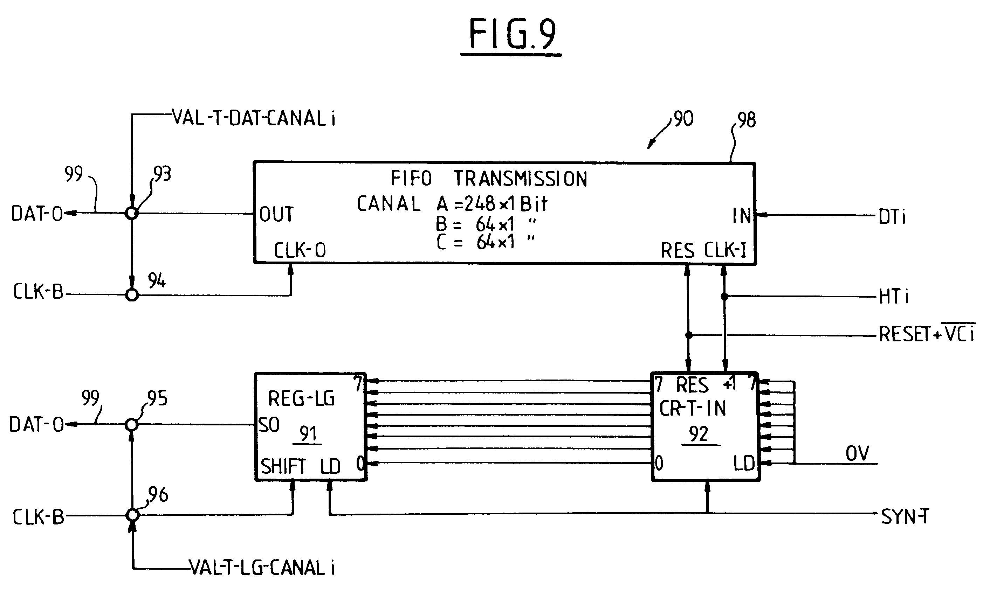

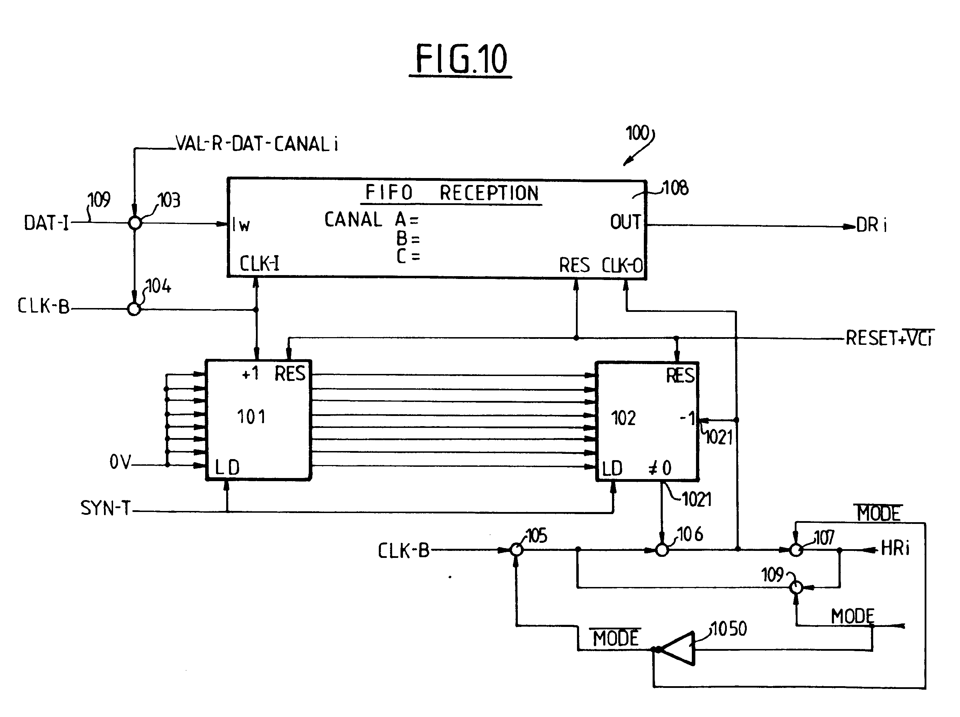

Un premier registre à décalage (8617) reçoit sur son entrée série les données circulant sur le bus privé (6), données qui sont décalées au rythme de l'horloge CLK-B reçues sur l'entrée d'horloge de ce registre, lorsque ce dernier registre est validé par le signal délivré par la sortie (8907) permettant de valider la réception des états. Les sorties parallèles de ce registre (8617) sont envoyées sur un registre tampon (8916) dont le chargement est commandé par le signal SYN-T, signal de synchronisation de trame. Ces valeurs d'état sont transmises à un bus (8620) par un registre (8609) qui constitue le registre R09 énuméré ci-dessus lorsque ce registre est commandé par le signal 10-12 émis par la sortie correspondante du circuit (8618) constituant le décodeur d'adresses registre en entrée et en sortie. Ce circuit (8618) décodeur des adresses registre en entrée et en sortie reçoit les quatre adresses de 0 à 3 provenant du micro-processeur associé (13) et les signaux de commande CS, RD et WR. En fonction de ces signaux, ce registre active sélectivement une de ses seize sorties 10-00 à 10-15. Sur le bus (8620) sont reliés en parallèle les 16 registres d'entrée dont seuls ceux correspondant au canal A sont représentés sur la figure 8D, c'est-à-dire les registres (8600-A, 8604-A, 8608-A, 8603-A, 8615) constituant respectivement les registres R00, R04, R08, R03 et R15. Ces registres sont chargés par l'activation des sorties respectives 10-00, 10-04, 10-08, 10-03 et 10-15 pendant la phase de traitement d'une trame N au cours de l'opération référencée (1501) commandée par le micro-processeur (130) associé au circuit d'adaptation. Ensuite, on synchronise avec le signal SYN-T, signal indicatif d'un début de trame, les données contenues dans ces registres sont transférées vers des registres de sorties référencés (8600-B, 8604-B, 8603-B) et un registre à décalage (8619) pour celui qui est relié en parallèle sur les sorties du registre (8608-A). Ce registre à décalage va transmettre sur sa sortie série DAT-OUT, les états à transmettre correspondant au canal A. Le décalage est validé par le signal reçu sur l'entrée de validation des sorties du registre (8619), ce signal étant le signal VAL-T-ETAT-A délivré par la sortie (8906) de la figure 8C. Le chargement du registre à décalage (8619) est commandé par le signal SYN-T au début d'une trame. Enfin, ce registre à décalage reçoit sur son entrée d'horloge le signal CLK-B. Le registre (8604-A) représentatif des adresses destinataires pour le canal A et de validation de la transmission a ces sorties reliées aux entrées d'un registre tampon (8604-B) dont les trois sorties représentatives des adresses destinataires sont reliées, d'une part au bus (8619), et d'autre part aux entrées parallèles d'un registre à décalage (8620). La quatrième sortie de ce registre (8604-B) représente le signal VTA transmis à la porte (89031). Ce registre tampon (8604-B) est chargé en synchronisme avec le signal SYN-T, et les sorties sont validées OUT-ADA. Le registre à décalage (8620) est chargé par le même signal OUT-ADA et son décalage est rythmé par l'horloge CLK-B envoyé sur son entrée d'horloge. Le décalage est validé par le signal VAL-T-ADR-D-A délivré par la sortie (8903) du circuit (89030) de la figure 8C. Les sorties DAT-OUT des circuits (8619) et (8620) sont reliées en parallèle au sorties (99) du circuit de la figure 9. Le registre R03 constitué par le circuit (8603-A) est chargé sur la commande du signal 10-03 par les données D0 à D2 envoyées par le microprocesseur à ce moment. Ce registre représente la définition du MODE horloge réception interne ou externe pour chacun des canaux A, B et C. Le contenu de ce registre est envoyé dans un registre tampon (8603-B) dont le chargement est synchronisé par le signal SYN-T. Ce registre (8603-B) délivre sur chacune de ces sorties, un signal MODE pour chacun des canaux A, B et C, signal qui est utilisé sur les entrées MODE et MODE de la figure 10 pour chacun des canaux concernés. Enfin, les information EST0 à EST2 et l'information ESY constituant respectivement les états des descripteur de sous-trames, et l'état de synchronisation sont mémorisés dans un registre R15 constitué par le circuit (8615) dont le chargement est validé par la sortie 10-15 du décodeur (8618).

Le circuit de la figure 8E représente, plus en détail, le circuit (88) de la figure 8A. La sortie VAL-T validation de transmission est constituée par la sortie d'une porte OU (888) dont les trois entrées reçoivent respectivement les signaux ENT-A, ENT-B, ENT-C provenant de la sortie (8908) de chaque décodeur (89030) associé à chaque canal A, B ou C. La sortie de cette porte OU (888) valide également l'amplificateur de sortie (887) dont l'entrée reçoit le signal DAT-OUT constitué par la mise en parallèle des sorties correspondantes des circuits (8619, 8620) et (99) du circuit de la figure 9. La sortie de ce circuit (887) est reliée par la borne DAT-IO à la ligne (62) du bus (6). Un circuit amplificateur (886) reçoit cette ligne (62). Ce circuit (886) a sa sortie reliée respectivement aux entrées DAT-I (109) de la figure 10, et le signal CLK-T fourni par l'horloge (820) fonctionnant à 8 KHz est envoyé sur l'entré D d'une bascule (880) dont l'entrée d'horloge reçoit le signal CLK-B fonctionnant entre 512 et 2 MHz. La sortie Q de cette bascule (880) est également envoyée à l'entrée d'une deuxième bascule (881) dont l'entrée d'horloge reçoit également le signal CLK-B inversé par un inverseur (889). La sortie Q de la bascule (880) et la sortie Q/ de la bascule (881) sont envoyées sur les deux entrées d'une porte ET (882) dont la sortie est reliée à l'entrée d'un amplificateur (883) commandé par le signal VAL-S. La sortie de cet amplificateur (883) génère le signal SYN-T de synchronisation de trame et par un inverseur (884) le signal CTU.

La figure 9 représente le circuit de transmission pour chacun des canaux A, B et C, ce circuit de transmission (90) est constitué pour chaque canal d'une pile FIFO 98 de transmission. La sortie OUT de cette pile délivre le signal de données à transmettre. Ce signal est validé à travers une porte ET(93), par le signal VAL-T-DAT-CANALi délivré pour le canal A par la sortie (8909) du circuit (89030). Le signal correspondant au canal utilisé sera par le circuit décodeur (89030) associé à ce canal. Ce signal émis par la sortie (8903) du circuit logique (89030) (fig. 8 et 16) prend en compte la validation du canal(VCA, VTA) et le passage du compteur de phases (8912) à la valeur "2".

La validation du canal tient compte à la fois du bit de validation du canal (VCA) et du bit de validation de transmission VTA contenu pour le canal A dans les registres R00 et R04, mais aussi du résultat de la comparaison dans le circuit (8908) entre le compteur d'adresse (8913) et l'adresse destinataire fournie par l'un des registres R00 à R02 selon le canal validé.

Cette pile FIFO reçoit sur son entrée IN les données DTI concernant le canal et arrivant directement de l'un des sérialisateurs 132, 133 ou 134 selon le canal concerné. Les données DTI sont rentrées au rythme de l'horloge HTi fournie par le micro-processeur associé (13) et arrivant directement du bus 131 sur une des entrée HTA, HTB ou HTC selon le canal concerné. Les données sont sorties au rythme de l'horloge CLK-B (65) validée par la porte ET(94) lorsqu'elle reçoit le signal VAL-T-DAT-CANALi fourni par exemple par la sortie (8909, fig. 8C) pour le canal A. Le circuit (90) comporte également un compteur (92) chargé initialement à la valeur "0" lorsqu'une impulsion est transmise sur son entrée de chargement "LD" par le signal SYN-T de synchronisation de trames fourni par la sortie du circuit (883, fig. 8E). Ce compteur est incrémenté au rythme de l'horloge HTi. Les huit sorties parallèles du compteur (92) sont envoyées sur un registre sérialisateur (91) dont le chargement est également commandé par le signal SYN-T, et dont le décalage série est commandé par l'horloge CLK-B. Cette horloge CLK-B est transmise au circuit (92) au travers d'une porte ET(96) lorsque cette dernière reçoit sur son autre entrée un signal VAL-T-LG-CANALi actif fourni par exemple par la sortie (8904, fig. 8C) pour le canal A. Ce signal est fourni par le circuit logique (89030, fig. 8C) lorsque les sorties (8912) du compteur de phases et (8910) fournissant le signal FST du circuit (891X) signalent la fin de la sous-trame précédente et lorsque le compteur d'adresses (8913) indique l'arrivée d'une sous-trame correspondant à l'adresse destinataire. A partir de ce moment, le signal délivré par la sortie (8904) est actif et le reste pendant les phases "0" et "1" du compteur de phases pour permettre la transmission de l'octet représentatif de la longueur de la sous-trame. Cette transmission est suivie de la transmission des bits d'adresse destinataire délivrés à la sortie (99) par la sortie DAT-OUT du registre (8620, fig. 8D) et des bits d'états délivrés à la sortie (99) par la sortie DAT-OUT du registre (8619, fig. 8D).

La sortie série du registre (91) constitue également la ligne (99), cette sortie étant validée au travers d'une porte ET(95) par l'entrée VAL-T-LG-CANALi. Les deux signaux VAL-T-LG-CANALi et VAL-T-DAT-CANALi permettent d'assurer un multiplexage temporel de la ligne (99). La pile FIFO du canal considéré (A) et le compteur (92) sont réinitialisés par un signal qui est le "OU logique" d'un signal "RESET" émis par le microprocesseur (13) et de la valeur complémentaire du bit de validation du canal considéré (VCi), ce bit se trouvant dans l'un des registres R00 à R02.

On remarque également que dans le canal A, la pile FIFO est prévue pour transmettre ou recevoir 248 bits, alors que dans les canaux B et C, le pile FIFO est prévue pour transmettre 64 bits.

Le circuit de réception 100 va maintenant être explicité à l'aide de la figure 10. Ce circuit (100) est constitué par une pile FIFO (108) dont l'entrée reçoit la ligne (109) validée au travers du porte ET(103) par le signal VAL-R-DAT-CANALi fourni pour le canal A par la sortie (8905) du décodeur (89050, fig. 8C). Cette entrée valide également par une porte ET(104) le signal CLK-B envoyé sur l'entrée CLK-I de la pile (108). La sortie OUT du circuit (108) constitue la sortie de données reçues DRi de chaque canal reliée respectivement au circuit (132) pour le canal A, au circuit (133) pour le canal B, au circuit (134, fig.7) pour le canal C. Un compteur (101) chargé à zéro reçoit également le signal CLK-B sur son entrée d'horloge. Le compteur reçoit le signal SYN-T sur l'entrée de chargement "LD", et ses huit sorties parallèles sont reliées à un registre (102) dont l'entrée de décrémentation (1020) est reliée à l'entrée CLK-O du circuit (108) recevant l'horloge de sortie des données pour ce circuit.

Le signal d'horloge du décalage des données DRi et de décrémentation du compteur (102) est constitué soit par l'horloge externe CLK-B validée au travers de la porte ET(105) par le signal MODE délivré par la sortie d'un inverseur (1050) servant sur son entrée la sortie MODE-A du circuit (8603-B), fig. 8D) pour le canal A. Ce signal d'horloge délivré par la sortie de la porte ET(105) est envoyé sur une porte ET(016) dont la deuxième entrée reçoit la sortie (1021) du compteur (102) qui indique que la valeur "0" n'est pas atteinte.

La sortie de la porte ET(105) est combinée avec la sortie de la porte ET(109) avant son introduction dans la porte ET(106). La sortie de la porte ET(109) délivre le signal HRi d'horloge interne du microprocesseur lorsque celui-ci est validé par la sortie MODE, délivré par la sortie MODE-A du circuit (8603-B, fig. 8D) pour le canal A.

Enfin, le signal d'horloge CLK-0 peut également être constitué par la sortie de la porte ET(107) lorsque le signal MODE est actif sur une première entrée de cette porte (107) et l'horloge HRi interne au microprocesseur (130) est envoyée sur une deuxième entrée de cette porte (107). Le signal VAL-R-DAT-CANALi est élaboré par le circuit électronique (89050) qui prend en compte le signal de validation du canal VCA, VCB, VCC. Ce signal provient de l'un des registres R00-R02. Le circuit (8905) prend également en compte le signal résultant de la comparaison du contenu du compteur d'adresses (8913) et du contenu de l'un des registres R00 à R02 de phase (8912), ainsi que la valeur des sorties lorsqu'elles indiquent que la valeur "4" a été atteinte.

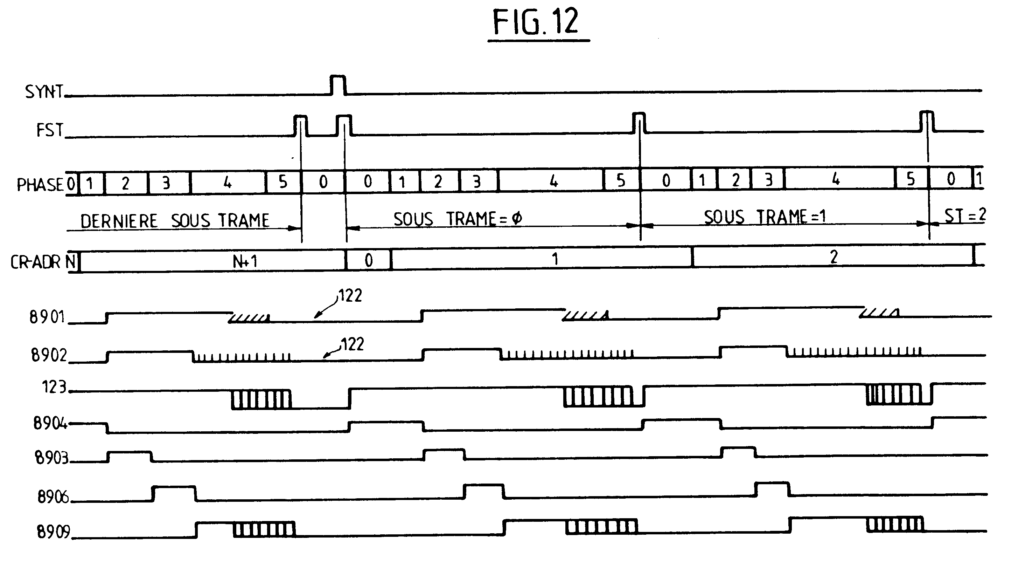

La figure 12 représente les séquences des signaux de validation d'adresses et de commandes fournis par le circuit (890, fig. 8B) en fonction des signaux de synchronisation de trames SYN-T, du signal du circuit (8910) de fin de synchronisation de trames FST, du compteur de phases (8912) de traitement de chaque sous-trame, du compteur d'adresses (8913) des sous-trames.

La signal (8901) délivré par le circuit (8901) représente la séquence du décompteur de nombre d'octets restant à lire, qui est chargé dans le circuit (8915) au début de chaque phase "2" et passe à la valeur zéro au cours de la phase "4" ou au plus tard au début de la phase "5". Les zones achurées correspondent au moment pendant lequel le compteur peut selon sa valeur initiale de chargement passer à zéro.

La signal (8902) représente l'évolution du circuit de compteur (8902, fig. 8B) décompteur du nombre d'octets et du nombre de bits restant à lire, son chargement au début de chaque phase "2" et son passage à zéro au cours de la phase "4" ou de la phase "5" selon la longueur de la sous-trame. Comme on peut le voir en (122), le compteur (8901) du nombre d'octets restant à lire reste à zéro si la sous-trame (120) est vide. De même, le compteur (8902) est chargé que si la longueur de la sous-trame est différente de la valeur hexadécimale 1F correspondant à une sous-trame vide.

La ligne 123 représente la séquence des signaux de validation de transmissions fournis par le registre (86) au cours des phases de traitement d'une sous-trame ;
Le signal (8904) délivré par la sortie (8904) du circuit (89030, fig. 8C) représente la séquence du signal de validation de la zone longueur au cours des phases "0 et 1" du traitement d'une sous-trame ;
Le signal (893) délivré par la sortie (8903) du circuit (89030) représente la séquence de validation d'une zone d'adresses au cours de la phase "2" de traitement d'une trame ;
Le signal (8906) représente la séquence de validation de la zone d'états au cours de la phase "3" de traitement d'une sous-trame ;
Le signal (8909) délivré par la sortie (8909) du circuit (89030) représente la séquence du signal de validation des zones de données au cours des phases "4 et 5" de traitement d'une sous-trame.

La figure 11 représente le schéma séquentiel des signaux d'horloge bits CLK-B, d'horloge trame non synchronisée CLK-T, de synchronisation de trames SYN-T, d'entrées-sorties de données DAT-IO, du signal du compteur de bits CR-BIT (8911), du signal de fin de sous-trames FST délivré par la sortie (8910) du circuit (891) et des signaux de phases de traitement des sous-trames délivrés par les sorties (8912).

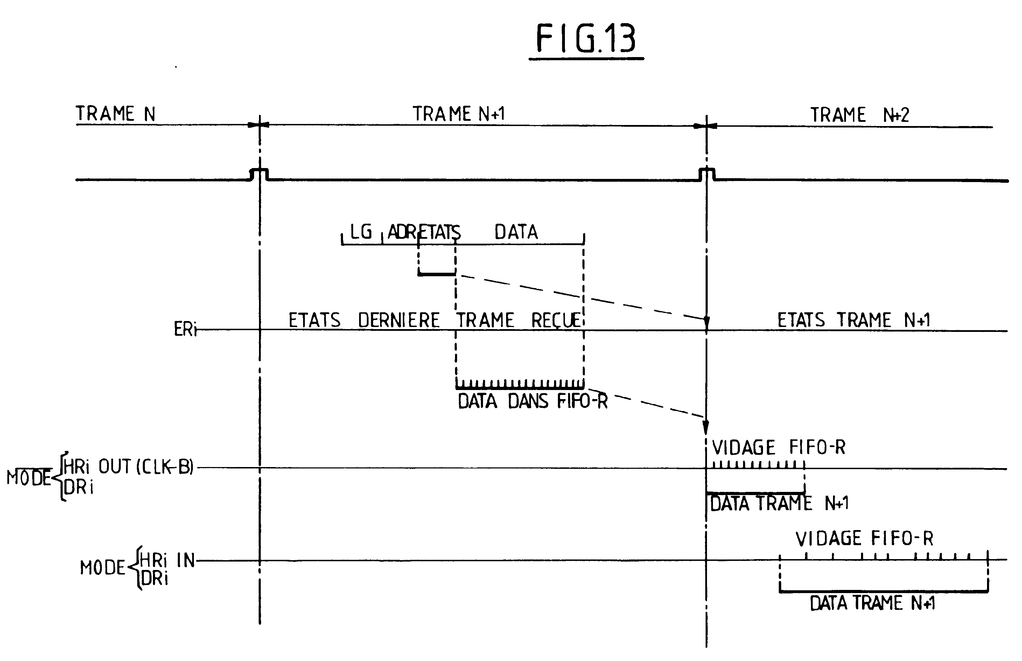

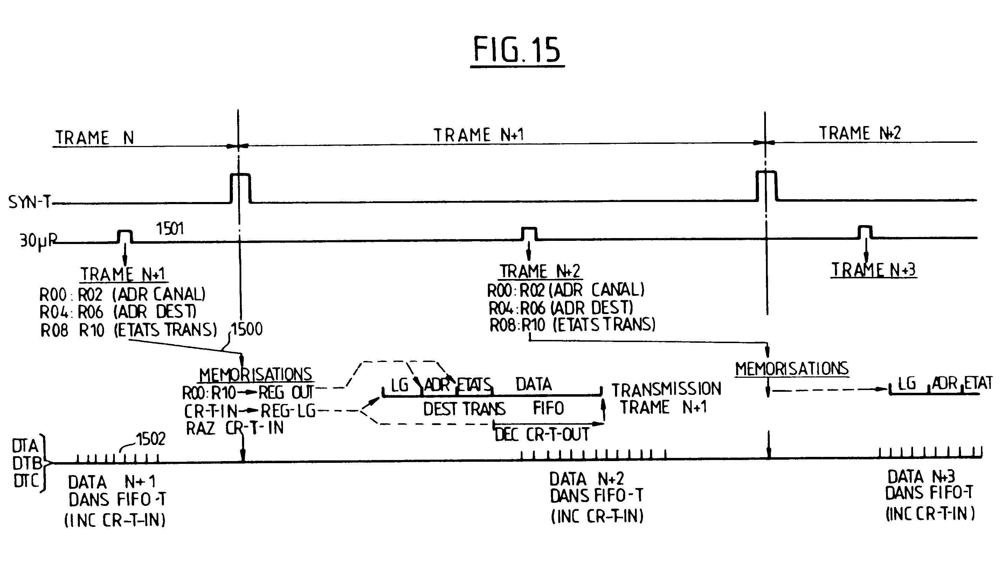

Les fonctionnements du circuit d'adaptation et du dispositif décrit vont maintenant être explicités à l'aide des figures 13 et 14 en réception, et les figures 15 et 16 en transmission.

A la réception, la procédure est représentée par les figures 13 et 14. Une trame N+1 reçue comporte, dans l'exemple figuré, six bits de données, et par conséquent, sa zone (41) comporte l'information "1" 0"1" et la zone (40) comporte l'information "00000". La sous-trame N, détectée par la fin de la phase "5" et le signal FST, permet de réintialiser le compteur de bits. Le circuit compteur d'adresses (8913), à la fin de la sous-trame N, indique l'adresse de la sous-trame N+1, et après le premier quartet de la sous-trame N+1, correspondant à l'activation de PM-1, indique l'adresse de la sous-trame N+2. A la fin des phases "0" et "1" de la sous-trame N+1, la valeur entrée au cours de cette sous-trame dans le registre (8914) est mémorisé dans le circuit (8915) de description de la longueur en octet de la sous-trame, et dans le circuit (8902) de description de la longueur en nombre de bits de la résistance. L'adresse destinataire est envoyée dans le registre R04 de l'ensemble de registres (86), en supposant que l'on travaille en réception sur le canal A. Cette adresse destinataire est envoyée à la fin de la phase "2". A la fin de la phase "3", les états reçus sur ce canal A sont stockés dans le registre R09. A la fin de la phase "5", qui ne comporte que deux bits de données (20, 21) dans cette phase, les données sont envoyées par la ligne DRI en direction du circuit 132 de désérialisation des données à l'intention du microprocesseur (130). A la fin de la sous-trame N+1, le décompteur (8902) est remis à zéro. En réalité comme on peut le voir à la figure 11, l'émission des données constituées par le vidage de la FIFO 108 en direction du microprocesseur s'effectue au début du traitement de la trame N+2 par le circuit de description de sous-trames. Pendant que le circuit de description exécute les phases 0 à 1, le vidage en direction du microprocesseur s'effectue.

La phase de transmission par le circuit d'adaptation va maintenant être décrite en liaison avec les figures 15 et 16.

Le microprocesseur 13 écrit au cours de l'étape (1501) par une commande envoyée sur l'entrée WR et le signal de sélection du registre sur l'entrée CS du circuit d'adaptation (fig. 8), l'adresse du canal dans les registres R00 à R02, l'adresse destinataire dans les registres R04 à R06, et les états de transmissions dans les registres R08 à R10 de l'ensemble de registres (86). Ces données sont mémorisées lors de l'apparition du signal de synchronisation de trames indiquant la fin de la trame N. Egalement à la fin de la trame N, le microprocesseur 130 envoie, par exemple, dans la pile correspondant au canal A, les données de la trame N+1. Pendant le traitement de la trame N+1 en transmission par le circuit d'adaptation, le microprocesseur (130) chargera les registres et les piles FIFO correspondantes avec les informations nécessaires à la transmission pour effectuer celle-ci pendant la trame suivante N+2 comme représenté à la figure 15.

La figure 16 représente les étapes de transmissions d'une sous-trame N+1 de trois bits. A la fin de la sous-trame N indiquée par la phase "5" de cette sous-trame et l'impulsion FST, le compteur d'adresse (8913) contient l'adresse de la sous-trame N+1. Pendant la phase (1502) de chargement des données à transmettre dans la pile (98), le circuit (92) incrémenté à chaque bit de donnée enregistre la longueur de la sous-trame. Cette longueur est transmise par le circuit (91) lorsque sa sortie est validée par le signal VAL-T-LG-CANALi délivré, par exemple pour le canal A, par la sortie (8904, fig. 8C). Le registre R04 par exemple pour le canal A (8620) va envoyer l'adresse de destinataire à la sortie (991). Lecircuit décodeur (89030) va faire suivre cette adresse destinataire de l'émission du registre R08 contenant les états à transmettre, fournis par le circuit (8619). Ensuite, les données (44) stockées dans la pile FIFO seront transmises dès l'apparition du signal de validation VAL-T-DAT-CANALi. A la fin de la transmission au cours de la phase "4", le décompteur (8902) du nombre de bits restant à lire dans la sous-trame repasse à zéro et indique la fin de la transmission. Les trames suivantes seront traitées de manière identique.

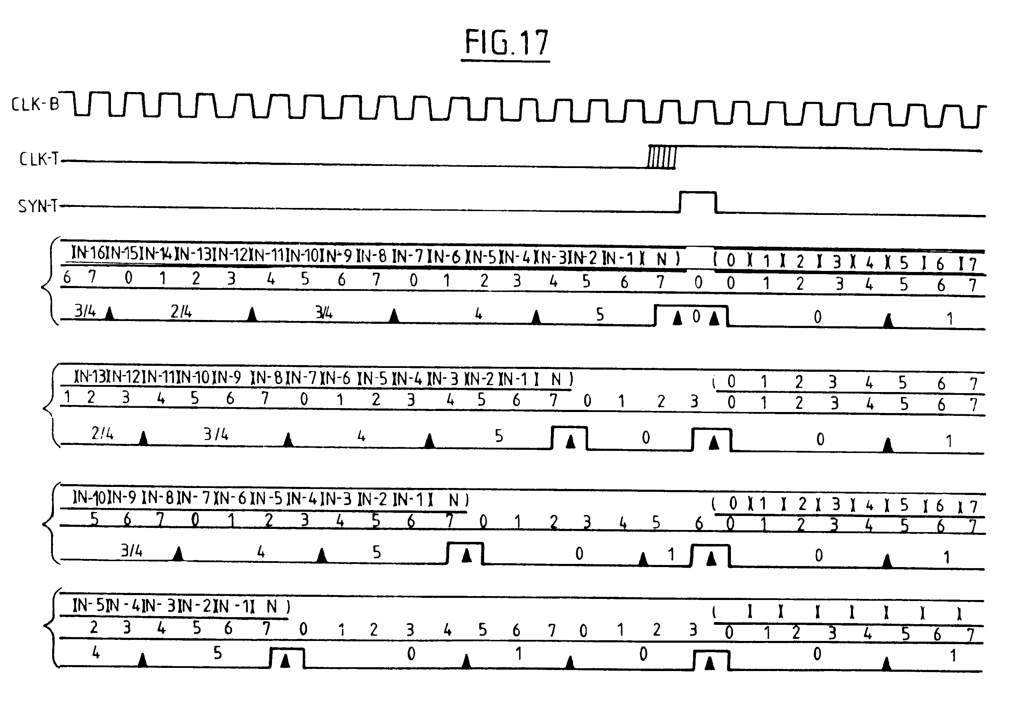

La figure 17 représente les diagrammes séquentiels de traitement de fin de trames et de début de trame par rapport aux signaux d'horloge bits CLK-B, d'horloge trame non synchronisée CLK-T, de synchronisation de trames SYN-T.

L'ensemble des moyens ainsi décrits permet d'assurer une liaison de données à 64 Kbps reçues par l'interface de ligne téléphonique (10) et transmises sur le canal de transmission B du circuit adaptateur (181) de l'interface de ligne téléphonique par le bus (6) au canal de réception B du circuit adaptateur du module (14) de compression-décompression d'image. L'image décompressée par le microprocesseur (140) sera réémise vers le canal de transmission A du circuit adaptateur (4,84) à un débit pouvant atteindre 2048 Kbps vers le canal A de réception du circuit adaptateur (3,83) du module d'interface série (16). Simultanément, une liaison du type X25 full duplex à 64 Kbps, également reçue par l'interface de ligne téléphonique (10), est transmise sur le canal de transmission B du circuit adaptateur (1,81) de l'interface (10) par le bus (6) au canal de réception B du circuit adaptateur (2,82) du module contrôleur de communication multi-protocoles (13). Cette liaison étant full duplex, le canal B de transmission du circuit adaptateur (2,82) du module (13) émet des sous-trames sur le bus (6) à destination du canal B de réception du circuit adaptateur (1,81) de l'interface (10) ILT.

## Revendications

1. Station de travail comportant un coupleur (10) d'interface de ligne de communication téléphonique caractérisé en ce que ce coupleur est relié à un dispositif à bus interne (6) à trois lignes constitué d'une ligne d'entrée-sortie de données, d'une ligne de synchronisation de trame et d'une horloge bit, un dispositif contrôleur de communication multi-protocoles (13) et un dispositif de traitement de la voix (15) reliés chacun entre le bus interne (6) et le bus système (20) de la station de travail.

2. Procédé de transmission de données sur un bus interne d'une station de travail selon la revendication 1 mettant en communication une carte coupleur (10) d'interface avec une ligne téléphonique et les cartes coupleurs (13,14,15,16) adaptées à différentes fonctions de communication, caractérisé en ce qu'il consiste à :
utiliser le signal de synchronisation d'un réseau voix, pour définir une trame de communication;
à insérer dans chaque trame de 125 microsecondes ainsi définie, au plus huit sous-trames, chacune de longueur variable pour connecter au maximum huit cartes coupleurs ;
à inscrire sur cinq bits (40) du premier octet le nombre d'octets de données transmises par la sous-trame, sur les trois bits suivants (41) le nombre de bits du dernier octet, et sur quatre bits (42) du deuxième octet de chaque sous-trame l'adresse destinataire de l'équipement adressé.

3. Procédé selon la revendication 2, caractérisé en ce que l'équipement récepteur des codes de l'entête de chaque sous-trame circulant sur le bus absorbe les seules sous-trames dont l'adresse destinataire correspond à l'adresse du coupleur.

4. Procédé selon l'une des revendications précédentes, caractérisé en ce que chaque sous-trame peut avoir une longueur variable entre 0 et 32 octets de données.

5. Procédé selon l'une des revendications précédentes, caractérisé en ce qu'une sous-trame ayant zéro octet de données occupe réellement un octet correspondant au code hexadécimal FF.

6. Dispositif à bus interne pour station de travail selon la revendication 1 comportant un bus (6) de trois lignes constitué d'une ligne (62) d'entrée-sortie de données, d'une ligne (64) de synchronisation de trame et d'une ligne (67) d'horloge bit, caractérisé en ce que ce bus met en communication par un circuit d'adaptation (1), une carte (10) coupleur d'interfaces lignes téléphoniques, avec la ligne téléphonique ;
par un second circuit d'adaptation (2), une carte (13) contrôleur de communication multi-protocoles et ;
par un troisième circuit d'adaptation (5), une carte (15) de traitement de la voix,
le circuit d'adaptation comportant au moins un circuit pour chacun d'une pluralité de canaux (A,B,C) de transmission série, et au moins un circuit pour chacun d'une pluralité de canaux (A,B,C) de réception série, un ensemble de registres (86) de cinq bits et un ensemble de circuits (891) de description des sous-trames et de validation (890) des adresses et commandes de sous-trames.

7. Dispositif à bus interne pour station de travail selon la revendication 6 caractérisé en ce que ce bus met en communication par un quatrième circuit d'adaptation (4), une carte de traitement d'images (14) assurant la compression et la décompression des images.

8. Dispositif à bus interne pour station de travail selon la revendication 6 caractérisé en ce que ce bus met en communication par un cinquième circuit d'adaptation (3) une carte (16) d'interfaces séries pour imprimantes et/ou scanners.

9. Dispositif selon la revendication 6, caractérisé en ce que la carte (13) contrôleur de communication multi-protocoles, la carte (14) de traitement d'images, la carte (15) de traitement de la voix sont chacune couplées au bus (20) du microprocesseur principal de la station de travail.

10. Circuit d'adaptation entre un bus interne de transmission et un dispositif de traitement de données (13,14,15,16) ayant une adresse destinataire et connecté à un bus parallèle du système (20) d'une station de travail caractérisé en ce qu'il comporte au moins un circuit de transmission série (90) pour chacun d'une pluralité de canaux (A,B,C) de transmission/réception connectés au bus parallèle du système à travers le dispositif de traitement de données (13,14,15,16) pour traiter les données transmises par le dispositif à chacun d'au moins deux canaux série de transmission/réception (A,B,C), au moins un canal de réception (100) parmi chacun d'une pluralité de canaux de transmission réception (A,B,C) connecté au bus parallèle du système (20) à travers le dispositif de traitement de données (13,14,15,16) pour traiter les données reçues du dispositif à travers chacun d'au moins deux canaux série de transmission/réception, un ensemble de registres de cinq bits (86) adressable, connecté audit circuit de transmission de canal et audit circuit de réception de canal pour recevoir les données transmises et reçues du dispositif (13,14,15,16) et pour stocker les informations représentatives de l'état de transmission ou de réception du dispositif (13,14,15,16) des dits canaux série de transmission/réception (A,B,C);
un circuit de description de sous-trames connecté au bus série interne pour fournir des signaux d'horloge dérivés en partie du bus série (6) et pour traiter les signaux d'horloge pour fournir une information indicative de l'état des dits canaux de série de transmission/réception (A,B,C) pour l'ensemble de registres (86), les dits signaux d'horloge correspondant à au moins la fonction de fin de sous-trames ;
et un circuit (890) de validation des adresses et de commandes des sous-trames connectées au circuit (90) du canal de transmission, au circuit (100) du canal de réception, et à l'ensemble des registres (86) pour examiner les adresses de sous-trames et pour fournir les signaux de validation et de commande à l'ensemble des registres (86) correspondant à au moins une des fonctions de validation de réception des données, de validation de transmission de données, de fin de transmission et dans lequel au moins un des registres (R04 à R06) de l'ensemble des registres (86) contient l'adresse destinataire et un bit de validation (VTA, VTB, VTC) d'un des canaux (A,B,C) fonctionnant en transmission.

11. Circuit selon la revendication 10, caractérisé en ce qu'au moins un des registres (R00 à R02) de l'ensemble des registres contient l'adresse de la sous-trame utilisée par le canal en fonction de l'émission ou de la réception du circuit d'adaptation, et un bit de validation (VCA, VCB, VCC) d'au moins un des canaux.

12. Circuit selon la revendication 10 ou 11, caractérisé en ce qu'au moins un des registres (R08 à R10) de l'ensemble des registres contient les bits représentatifs des états de lignes du canal (A,B,C) fonctionnant en transmission.

13. Circuit selon une des revendications 10 à 12 caractérisé en ce qu'au moins un des registres (R12 à R14) contient les bits représentatifs des états de lignes du canal (A,B,C) fonctionnant en réception.

14. Circuit selon une des revendications 10 à 13 caractérisé en ce qu'il comprend un registre (R15) d'états de synchronisation et d'états descripteur de sous-trames.

15. Circuit selon la revendication 10, caractérisé en ce que le circuit de transmission série pour chaque canal (A,B,C) comprend une pile FIFO (98) associée avec un compteur du nombre de bits à transmettre, lui-même associé avec un registre (91) de longueur de sous-trame dont le chargement est commandé par le signal de synchronisation de trame (SYN-T) et le décalage par le signal d'horloge bit du bus (CLK-B), la sortie série (99) du registre étant branchée en parallèle sur la sortie série (99) de la pile FIFO, chacune de ces sorties étant successivement validée par un signal de validation de la longueur VAL-T-LG et respectivement des données VAL-T-DAT fourni par le circuit (890) de validation des adresses et commandes.

16. Circuit selon la revendication 10, caractérisé en ce que le circuit de réception de chaque canal (A,B,C) est constitué d'une pile FIFO (118) de réception recevant les données au rythme de l'horloge bit du bus (CLK-B), et d'un compteur (101) des coups d'horloge bit chargé à zéro par le signal de synchronisation de trame (SYN-T) et réinitialisé par le signal de RESET et un décompteur (102) à entrée parallèle chargé par la longueur des données entrées dans la pile (108).

17. Circuit selon la revendication 15 ou 16, caractérisé en ce que le circuit de validation des adresses et commandes comporte des moyens (8908, 89030, 89050) de valider chacune des phases en transmission ou en réception permettant de constituer une sous-trame.

## Patentansprüche

1. Arbeitsstation mit einem Telefonleitungs-Schnittstellen-Koppler (10), dadurch gekennzeichnet, daß dieser Koppler mit einer einen internen Bus (6) mit drei Leitungen aufweisenden Einrichtung verbunden ist, wobei der interne Bus durch eine Daten-Eingabe/Ausgabe-Leitung, eine Rahmensynchronisationsleitung und eine Bittaktleitung gebildet ist, und wobei eine Nehrfachprotokoll-Übertragungssteuereinrichtung (13) und eine Sprachverarbeitungseinrichtung (15) jeweils zwischen den internen Bus (6) und den Systembus (20) der Arbeitsstation geschaltet sind.

2. Verfahren zur Übertragung von Daten auf einem internen Bus einer Arbeitsstation nach Anspruch 1, der eine Verbindung mit einer Kopplerkarte (10) einer Schnittstelle mit einer Telefonleitung und den an verschiedene Übertragungsfunktionen angepaßten Kopplerkarten (13, 14, 15, 16) herstellt, dadurch gekennzeichnet, daß es auf folgendem beruht:
Verwenden des Synchronisationssignales eines Sprechnetzes zum Festlegen eines Übertragungsrahmens;
Einfügen von höchstens acht Unterrahmen in jeden auf diese Weise festgelegten Rahmen von 125 Mikrosekunden, wobei jeder Unterrahmen eine variable Länge besitzt, um höchstens acht Kopplerkarten anzuschließen;
Einschreiben der Anzahl von durch den Unterrahmen übertragenen Datenbytes bei fünf Bits (40) des ersten Bytes, Einschreiben der Anzahl von Bits des letzten Bytes bei den folgenden drei Bits (41) und Einschreiben der Zieladresse der adressierten Einrichtung bei vier Bits (41) des zweiten Bytes eines jeden Unterrahmens.

3. Verfahren nach Anspruch 2, dadurch gekennzeichnet, daß die Empfangseinrichtung für die Codes des Vorsatzes eines jeden auf dem Bus zirkulierenden Unterrahmens nur die Unterrahmen aufnimmt, deren Zieladresse der Adresse des Kopplers entspricht.

4. Verfahren nach einem der vorhergehenden Ansprüche, dadurch gekennzeichnet, daß jeder Unterrahmen eine zwischen 0 und 32 Datenbytes variierbare Länge besitzen kann.

5. Verfahren nach einem der vorhergehenden Ansprüche, dadurch gekennzeichnet, daß ein Unterrahmen mit null Datenbytes tatsächlich ein dem Hexidezimalcode FF entsprechendes Byte belegt.

6. Einrichtung mit internem Bus für eine Arbeitsstation nach Anspruch 1, mit einem drei Leitungen aufweisenden Bus (6), der durch eine Daten-Eingabe/Ausgabe-Leitung (62), eine Rahmensynchronisationsleitung (64) und eine Bittaktleitung (67) gebildet ist, dadurch gekennzeichnet, daß dieser Bus durch eine Anpassungsschaltung (1) eine Verbindung mit einer Kopplerkarte (10) für Telefonleitungsschnittstellen mit der Telefonleitung herstellt;
durch eine zweite Anpassungsschaltung (2) mit einer Mehrfachprotokoll-Übertragungssteuerungskarte (13); und
durch eine dritte Anpassungsschaltung (5) mit einer Sprachverarbeitungskarte (15),
wobei die Anpassungsschaltung wenigstens eine Schaltung für jeden von mehreren seriellen Sendekanälen (A, B, C) und wenigstens eine Schaltung für jeden von mehreren seriellen Empfangskanälen (A, B, C) sowie eine Gruppe von Registern (86) von fünf Bits und eine Gruppe von Schaltungen (891) zur Beschreibung der Unterrahmen und von Schaltungen (890) zur Freigabe der Adressen und Befehle von Unterrahmen enthält.

7. Einrichtung mit internem Bus für eine Arbeitsstation nach Anspruch 6, dadurch gekennzeichnet, daß dieser Bus durch eine vierte Anpassungsschaltung (4) eine Verbindung mit einer Bildverarbeitungskarte (14) herstellt, die die Kompression und die Dekompression der Bilder sicherstellt.

8. Einrichtung mit internem Bus für eine Arbeitsstation nach Anspruch 6, dadurch gekennzeichnet, daß dieser Bus durch eine fünfte Anpassungsschaltung (3) eine Verbindung mit einer Serienschnittstellenkarte (16) für Drucker und/oder Scanner herstellt.

9. Einrichtung nach Anspruch 6, dadurch gekennzeichnet, daß die Mehrfachprotokoll-Übertragungssteuerungskarte (13), die Bildverarbeitungskarte (14) und die Sprachverarbeitungskarte (15) jeweils mit dem Bus (20) des Hauptmikroprozessors der Arbeitsstation gekoppelt sind.

10. Anpassungsschaltung zwischen einem internen Übertragungsbus und einer Datenverarbeitungseinrichtung (13, 14, 15, 16), die eine Zieladresse besitzt und mit einem parallelen Bus (20) des Systems einer Arbeitsstation verbunden ist, dadurch gekennzeichnet, daß sie wenigstens eine Seriensendeschaltung (90) für jeden von mehreren Sende/Empfangs-Kanälen (A, B, C) enthält, die mit dem parallelen Bus des Systems über die Datenverarbeitungseinrichtung (13, 14, 15, 16) zur Verarbeitung der Daten verbunden ist, die durch die Einrichtung zu jedem von wenigstens zwei Serien-Sende/Empfangs-Kanälen (A, B, C) gesendet werden, sowie wenigstens einen Empfangskanal (100) unter jedem von mehreren Sende/Empfangs-Kanälen (A, B, C), der mit dem parallelen Bus des Systems (20) über die Datenverarbeitungseinrichtung (13, 14, 15, 16) zur Verarbeitung der Daten verbunden ist, die von der Einrichtung über einen jeden von wenigstens zwei Serien-Sende/Empfangs-Kanälen empfangen werden, eine adressierbare Gruppe (86) von Registern von fünf Bits, die mit der Kanalsendeschaltung und der Kanalempfangsschaltung verbunden ist, um die gesendeten und empfangenen Daten der Vorrichtung (13, 14, 15, 16) aufzunehmen und um die Informationen zu speichern, die repräsentativ für den Sende- oder Empfangszustand der Einrichtung (13, 14, 15, 16) der Serien-Sende/Empfangs-Kanäle (A, B, C) sind;
eine Unterrahmen-Beschreibungsschaltung, die mit dem internen seriellen Bus verbunden ist, um zum Teil von dem seriellen Bus (6) abgeleitete Taktsignale zu liefern und um die Taktsignale zu verarbeiten und eine Information zu liefern, die den Zustand der Serien-Sende/Empfangs-Kanäle (A, B, C) für die Registergruppe (86) angibt, wobei die Taktsignale wenigstens der Unterrahmenendefunktion entsprechen;
und eine Schaltung (890) zur Freigabe der Adressen und von Befehlen der Unterrahmen, die mit der Schaltung (90) des Sendekanals, der Schaltung (100) des Empfangskanals und mit der Gruppe von Registern (86) verbunden ist, um die Unterrahmen-Adressen zu prüfen und die Freigabe- und Steuersignale an die Gruppe der Register (36) entsprechend wenigstens einer der eine Datenempfangs-Freigabefunktion, eine Datensende-Freigabefunktion und eine Sendungsendefunktion enthaltenden Funktionen zu liefern, wobei wenigstens eines der Register (R04 bis R06) der Gruppe von Registern (86) die Zieladresse und ein Freigabe-Bit (VTA, VTB, VTC) eines der im Sendebetrieb arbeitenden Kanäle (A, B, C) enthält.

11. Schaltung nach Anspruch 10, dadurch gekennzeichnet, daß wenigstens eines der Register (R00 bis R02) der Gruppe von Registern die Adresse des Unterrahmens enthält, der von dem Kanal in Abhängigkeit von dem Senden oder dem Empfangen der Anpassungsschaltung verwendet wird, und ein Freigabe-Bit (VCA, VCB, VCC) für wenigstens einen der Kanäle enthält.

12. Schaltung nach Anspruch 10 oder 11, dadurch gekennzeichnet, daß wenigstens eines der Register (R08 bis R10) der Gruppe von Registern die Bits enthält, die für die Zustände von Leitungen des Kanals (A, B, C) im Sendebetrieb repräsentativ sind.

13. Schaltung nach einem der Ansprüche 10 bis 12, dadurch gekennzeichnet, daß wenigstens eines der Register (R12 bis R14) die Bits enthält, die für die Zustände von Leitungen des Kanals (A, B, C) im Empfangsbetrieb repräsentativ sind.

14. Schaltung nach einem der Ansprüche 10 bis 13, dadurch gekennzeichnet, daß sie ein Register (R15) für Synchronisationszustände und Deskriptorzustände von Unterrahmen enthält.

15. Schaltung nach Anspruch 10, dadurch gekennzeichnet, daß die serielle Sendeschaltung für jeden Kanal (A, B, C) einen FIFO-Stapelspeicher (98) enthält, dem ein Zähler für die Anzahl von zu sendenden Bits zugeordnet ist, dem wiederum ein Register (91) von der Länge eines Unterrahmens zugeordnet ist, dessen Laden durch das Rahmensynchronisationssignal (SYN-T) und dessen Verschiebung durch das Bittaktsignal des Busses (CLK-B) gesteuert ist, wobei der serielle Ausgang (99) des Registers zu dem seriellen Ausgang (99) des FIFO-Stapelspeichers parallelgeschaltet ist und aufeinanderfolgend jeder dieser Ausgänge durch ein Freigabesignal VAL-T-LG für die Länge bzw. ein Freigabesignal VAL-T-DAT für die Daten freigegeben wird, das von der Schaltung (890) zur Freigabe der Adressen und Befehle geliefert wird.

16. Schaltung nach Anspruch 10, dadurch gekennzeichnet, daß die Empfangsschaltung eines jeden Kanals (A, B, C) durch einen FIFO-Empfangsstapelspeicher (118) gebildet ist, der die Daten im Takt des Bittaktes des Busses (CLK-B) empfängt, durch einen Zähler (101) für die Bittaktschläge, der durch das Rahmensynchronisationssignal (SYN-T) auf Null gesetzt und durch das RESET-Signal neu initialisiert wird, und durch einen Abwärtszähler (102) mit parallelem Eingang, der mit der Länge der dem Stapelspeicher (108) eingegebenen Daten geladen wird.

17. Schaltung nach Anspruch 15 oder 16, dadurch gekennzeichnet, daß die Schaltung für die Freigabe der Adressen und Befehle Mittel (8908, 89030, 89050) zum Freigeben einer jeden der Sende- oder Empfangsphasen zum Bilden eines Unterrahmens enthält.

## Claims

1. A work station comprising atelephone communication line interface coupler (10) characterised in that this coupler is connected to an internal bus device (6) with three lines constituted by an input-output data line, a frame synchronisation line and a bit clock, a multiprotocol communications controller device (13) and a voice processing device (15) each connected between the internal bus (6) and the system bus (20) of the work station.

2. A process for transmitting data over an internal bus of a work station according to Claim 1, putting into communication an interface coupler board (10) with a telephone line and the coupler boards (13, 14, 15, 16) suitable for different communications functions, characterised in that it consists of:
using the synchronising signal of a voice network, to define a communication frame;
inserting into each 125 microsecond frame thus defined, at most eight sub-frames, each of variable length, to connect at most eight coupler boards;
entering on five bits (40) of the first byte the number of data bytes transmitted by the sub-frame, on the three following bits (41) the number of bits of the last byte, and on four bits (42) of the second byte of each sub-frame the destination address of the equipment being addressed.

3. A process according to Claim 2, characterised in that the equipment receiving the codes of the header of each sub-frame circulating on the bus absorbs the only sub-frames having a destination address corresponding to the address of the coupler.

4. A process according to one of the preceding claims, characterised in that each sub-frame can have a variable length between 0 and 32 data bytes.

5. A process according to one of the preceding claims, characterised in that a subframe having zero data bytes actually occupies a byte corresponding to the hexadecimal code FF.

6. An internal bus device for a work station according to Claim 1 comprising a bus (6) with three lines constituted by a data input-output line (62), a frame synchronisation line (64) and a bit clock line (67), characterised in that this bus puts into communication, via an adapter circuit (1), a telephone line interface coupler board (1 0), with the telephone line;
via a second adapter circuit (2), a multiprotocol communications controller board (13); and
via a third adapter circuit (5), a voice processing board (15),
the adapter circuit comprising at least one circuit of each of a plurality of serial transmission channels (A, B, C), and at least one circuit of each of a plurality of serial reception channels (A, B, C), a set of five-bit registers (86) and a set of circuits describing (891) the sub-frames and circuits validating (890) the subframe commands and addresses.

7. An internal bus device for a work station according to Claim 6, characterised in that this bus puts into communication, via a fourth matching circuit (4), an image processing board (14) carrying out the compression and expansion of the images.

8. An internal bus device for a work station according to Claim 6 characterised in that this bus puts into communication, via a fifth matching circuit (3), a serial interface board (16) for printers and/or scanners.

9. A device according to Claim 6, characterised in that the multiprotocol communications controller board (13), the image processing board (14), the voice processing board (15) are each coupled to the bus (20) of the main microprocessor of the work station.

10. An adapter circuit between an internal transmission bus and a data processing device (13, 14, 15, 16) having a destination address and connected to a parallel bus of the system (20) of a work station, characterised in that it comprises at least one serial transmission circuit (90) for each of a plurality of transmission/reception channels (A, B, C) connected to the parallel bus of the system through the data processing device (13, 14, 15, 16) in order to process the data transmitted by the device to each of at least two serial transmission/reception channels (A, B, C), at least one reception channel (100) among each of a plurality of transmission reception channels (A, B, C) connected to the parallel bus of the system (20) across the data processing device (13, 14, 15, 16) in order to process the data received from the device through each of at least two serial transmission/reception channels, a set of five-bit addressable registers (86), connected to said channel transmission circuit and said channel reception circuit in order to receive the data transmitted and received from the device (13, 14, 15, 16) and in order to store the information representing the state of transmission or reception of the device (13, 14, 15, 16) of said serial transmission/reception channels (A, B, C);
a sub-frame description circuit connected to the internal serial bus in order to supply clock signals derived partly from the serial bus (6) and to process the clock signals in order to supply information indicating the state of said serial transmission/reception channels (A, B, C) for the set of registers (86), said clock signals corresponding to at least the end of sub-frames function;
and a circuit (890) for validating the addresses and commands of the sub-frames connected to the transmission channel circuit (90), to the reception channel circuit (100), and to the set of registers (86) in order to examine the sub-frame addresses and to supply the validation and command signals to the set of registers (86) corresponding to at least one of the functions of data reception validation, data transmission validation, end of transmission and in which at least one of the registers (R04 to R06) of the set of registers (86) contains the destination address and a validation bit (VTA, VTB, VTC) of one of the channels (A, B, C) operating in transmission.

11. A circuit according to Claim 10, characterised in that at least one of the registers (R00 to R02) of the set of registers contains the address of the sub-frame used by the channel as a function of the emission or reception of the adapter circuit, and a validation bit (VCA, VCB, VCC) for at least one of the channels.

12. A circuit according to Claim 10 or 11, characterised in that at least one of the registers (R08 to R10) of the set of registers contains the bits representing the line states of the channel (A, B, C) operating in transmission.

13. A circuit according to one of Claims 10 to 12, characterised in that at least one of the registers (R12 to R14) contains the bits representing the line states of the channel (A, B, C) operating in reception.

14. A circuit according to one of Claims 10 to 13, characterised in that it comprises a register (R15) of synchronisation states and sub-frame descriptor states.

15. A circuit according to Claim 10, characterised in that the serial transmission circuit for each channel (A, B, C) comprises a FIFO push-up stack (98) associated with a counter for the number of bits to be transmitted, itself associated with a sub-frame length register (91), of which the loading is controlled by the frame synchronisation signal (SYN-T) and the shifting by the bit clock signal of the bus (CLK-B), the serial output (99) of the register being connected in parallel to the serial output (99) of the FIFO push-up stack, each of these outputs being validated in succession by a length validation signal VAL-T-LG and, respectively, a data validation signal VAL-T-DAT, supplied by the command and address validation circuit (890).

16. A circuit according to Claim 10, characterised in that the reception circuit of each channel (A, B, C) is constituted by a reception FIFO push-up stack (118) receiving the data at the rate of the bit clock of the bus (CLK-B), and a bit clock beat counter (101) set to zero by the frame synchronisation signal (SYN-T) and reinitialised by the RESET signal and a parallel-input down-counter (102) set by the length of the data input into the push-up stack (1 08).

17. A circuit according to Claim 15 or 16, characterised in that the command and address validation circuit comprises means (8908, 89030, 89050) for validating each of the phases in transmission or in reception allowing a sub-frame to be constituted.
